# EUROPÄISCHE PATENTANMELDUNG

(11) **EP 4 686 526 A1**
(43) Veröffentlichungstag der Anmeldung: **04.02.2026**
(21) Anmeldenummer: 24192075.0
(22) Anmeldetag: 31.07.2024
(51) Int. Cl.: B23P 19/08, F16J 15/3268, B25B 27/00

(54) **MONTAGEVORRICHTUNG**

(71) Anmelder: STIWA Automation GmbH, 4800 Attnang-Puchheim (AT)
(72) Erfinder: KURZ-REICHMANN, Gerald, 4691 Schlatt (AT); SCHARMÜLLER, Michael, 4861 Schörfling am Attersee (AT); KÖPFLE, Christian, 4870 Vöcklamarkt (AT); SCHIEMER, Stefan, 4870 Pfaffing (AT)
(74) Vertreter: Burger, Hannes Alfred

(57) **Zusammenfassung**

Die Erfindung betrifft eine Montagevorrichtung (1, 22) zum Positionieren von flexiblen Ringen (12), insbesondere von Dicht- oder Abstreifringen, in Innennuten (14) von Bauteilen (15), sowie ein Verfahren unter Verwendung dieser Montagevorrichtung. Diese ist ausgestattet mit einem verfahrbaren Aufnahmestift (2, 23) und mit einem Beaufschlagungsstift (5, 24) zum Verformen des Ringes derart, dass der Ring in den Bauteil (15) einschiebbar ist. Dabei sind Aufnahmestift (2, 23) und Beaufschlagungsstift (5, 24) parallel zueinander ausgerichtet und in einer Richtung quer zu deren Längserstreckung relativ zueinander verfahrbar. Der Aufnahmestift (2, 23) besteht aus zumindest zwei in Längsrichtung parallel angeordneten und relativ zueinander bewegbaren Teilstiften (2a, 2b; 23a, 23b).

## Beschreibung

Die Erfindung betrifft Montagevorrichtung zum Positionieren von flexiblen Ringen, insbesondere von O-Ringen, Formdichtungen, Dicht- oder Abstreifringen, in Innennuten von Bauteilen, gemäss dem Oberbegriff von Anspruch 1, sowie ein Verfahren zum Positionieren derartiger Ringe, gemäss dem Oberbegriff von Anspruch 11.

Die DE 102008026809A1 offenbart eine Ausführungsform einer Montagevorrichtung zum Positionieren von flexiblen Ringen in Innennuten von rohrförmigen Kanälen, insbesondere von Dicht- oder Abstreifringen in Durchgangskanälen von Wechselarmaturen. Diese Vorrichtung weist einen Halteschaft mit einer zumindest teilringförmigen, umlaufenden Aufnahme für den zu positionierenden Ring auf. Im Überschneidungsbereich mit der Aufnahme sind eine Ausnehmung zur Verwahrung einer Umfangsteillänge des Rings und eine Beaufschlagungseinheit zum Eindrücken des Ringes in die Aufnahme und die Ausnehmung angeordnet. Mit dieser Montagevorrichtung ist der Ring mit seiner durchmesserbezogenen Außenkontur zur Einführung in den rohrförmigen Kanal und Positionieren in axialer Fluchtung mit der Innennut durch den Kanal schiebbar und durch Entfernung der Beaufschlagungseinheit, gegebenenfalls des Halteschaftes, in die Innennut freigebbar.

In der CN 103358278 A ist eine ähnliche Vorrichtung beschrieben, mit der ein Dichtungsring einfach in eine Dichtungsring-Installationsnut eingebaut werden kann, die auf einer Innenumfangsfläche eines tonnenförmigen Gehäuses ausgebildet ist. Die Vorrichtung umfasst: einen Vorrichtungshauptkörper, wobei der Durchmesser des Vorrichtungshauptkörpers entsprechend kleiner ist als ein Innendurchmesser des Gehäuses; weiters eine Umfangsfläche mit einer sich entlang einer Umfangsrichtung erstreckenden Dichtungsring-Halterungsnut und gleichzeitig mit einem Hohlteil versehen ist, wobei die Dichtungsring-Halterungsnut durch einen Teil des Hohlteils in Umfangsrichtung unterbrochen ist; und ein Presselement, das in das Hohlteil einsteckbar ist, wobei ein Teil des Dichtungsrings von außen entlang des Dichtungsrings auf den Vorrichtungshauptkörper aufgesteckt ist. Die Haltenut verformt sich zum Hohlteil, so dass der Dichtring in die Haltenut des Dichtrings eingebettet wird. Zum Eindrücken des Ringes in die Haltenut wird eine eng begrenzte Nocke am Aussenumfang des Hauptkörpers nach aussen gedreht und durch Drehen des Hauptkörpers am Innenumfang des Ringes entlanggeführt.

Die EP 3202530 A1 hingegen offenbart eine O-Ring-Montagevorrichtung mit einer O-Ring-Stützeinheit, die einen O-Ring von innen an mindestens drei Stützpunkten abstützen kann. Eine O-Ring-Einpresseinheit ist zum Einpressen des O-Rings von seiner Außenseite zwischen zwei Auflagepunkten der mindestens drei Auflagepunkte vorgesehen. Eine Einheit zum Lösen des eingedrückten Zustands eines durch die O-Ring-Einpresseinheit hergestellten eingedrückten Zustands des O-Rings ist ebenfalls vorhanden.

Allen dieser bekannten Montagevorrichtungen ist es gemeinsam, dass der Halteschaft oder der den Ring aufnehmende Bauteil entweder relativ gross und massiv ist, wodurch die Aufbringung des Ringes aufwendig ist, oder dass mehrere, eng begrenzte Auflagepunkte vorgesehen sind, welche punktuelle Beanspruchungen des Ringes beim Aufspannen und Halten mit sich bringen. Diese punktuellen Belastungen liegen dann auch beim Eindrücken des Ringes in die Haltenut vor und könnten den Ring noch im letzten Schritt des Einbaus beschädigen.

Die DE 102005007087 B3 hat eine Vorrichtung zum Einsetzen eines elastischen Dichtringes, insbesondere eines O-Ringes, in die Ringnut eines Werkstückes, die sich versenkt in einer Werkstückbohrung befindet, zum Gegenstand. Die Vorrichtung besteht aus einem Montagewerkzeug zur Aufnahme und zum Einsetzen des elastischen Dichtringes und einer Aufnahmeeinrichtung zum Aufnehmen des elastischen Dichtringes durch das Montagewerkzeug. Das Werkzeug weist einen in einer Innenhülse verschiebbaren Dorn auf, der an seinem vorderen freien Ende eine verbreiterte Spitze besitzt, in deren Bereich zumindest teilweise eine Nut zur Aufnahme des elastischen Dichtringes eingearbeitet ist. Die Innenhülse ist von einer Hülse umschlossen, die an ihrem vorderen Ende eine Zentrierhülse und dieser benachbart einen Anschlag aufweist, wobei Dorn und Hülse fest mit einander verbunden sind. Die Aufnahmeeinrichtung weist eine Bohrung zur Aufnahme der Spitze des Dorns auf, in welcher auch ein in der Bohrung auf den Dorn hin verschiebbarer Druckstift zum Aufschieben des elastischen Dichtringes auf den Dorn vorgesehen ist.

Die EP 1806205 A1 offenbart ein Verfahren zur Montage von innenliegenden O-Ringen und eine Vorrichtung zur Durchführung des Verfahrens, bei welchem ein O-Ring mittels eines Schiebers in eine Aufnahmevorrichtung eingeschoben wird. Anschliessen wird eine Montagevorrichtung mit einem aus einer Hülse und einer Zugstange bestehenden Aufnahmestift so in die Aufnahmevorrichtung hinein verfahren, dass eine von der Hülse und der Zugstange gebildete Aussennut zur Aufnahme des O-Ringes sich innerhalb desselben befindet. Mit Hilfe des Schiebers wird der O-Ring an den von der Zugstange gebildeten Nutgrund angedrückt und dann die Zugstange innerhalb der Hülse so weit axial verschoben, dass der O-Ring an der Oberfläche von Hülse und Zugstange fest anliegt, wobei der Ring auch dreidimensional aus der ursprünglichen Ringebene heraus verformt wird. Schliesslich wird die Montagevorrichtung in ein Werkstück mit Innennut eingeschoben, bis die von der Hülse gebildete Aussennut und die Innennut fluchten, die Zugstange wieder zurück verschoben, und so der O-Ring in seine ursprüngliche ebene Form gebracht wird, in welche er ohne weitere Anordnungen oder Massnahmen zum Eindrücken passiv in die Innennut eindringt.

Aufgabe der vorliegenden Erfindung war es, die Nachteile des Standes der Technik zu überwinden und eine möglichst einfache und dennoch flexible Vorrichtung und ein Verfahren zur Verfügung zu stellen, mittels derer ein flexibler Ring einfach, rasch und materialschonend aufgenommen, transportiert und in eine Innennut verbracht und eingebracht und schliesslich materialschonend und dennoch sicher montiert werden kann.

Diese Aufgabe wird durch eine Vorrichtung und ein Verfahren gemäß den Ansprüchen gelöst.

Die erfindungsgemäße Vorrichtung geht von einer Montagevorrichtung mit einem in alle orthogonalen Richtungen verfahrbaren Aufnahmestift aus, der gegebenenfalls mit einer zumindest teilringförmigen umlaufenden Aufnahme oder eine Anlageschulter für den Ring, versehen ist. Weiters ist ein Beaufschlagungsstift zum Verformen des Ringes vorgesehen, damit der Ring mit seiner durchmesserbezogenen Außenkontur zur Einführung in den rohrförmigen Kanal und Positionieren in den Bauteil einschiebbar ist, wobei der Aufnahmestift und der Beaufschlagungsstift parallel zueinander ausgerichtet und in einer Richtung quer zu deren Längserstreckung relativ zueinander verfahrbar sind.

Diese Vorrichtung ist erfindungsgemäss dadurch gekennzeichnet, dass der Aufnahmestift aus zumindest zwei in Längsrichtung parallel angeordneten und relativ zueinander bewegbaren Teilstiften derart besteht, dass der Ring im Zug der Relativbewegung verformt wird. Durch die relative Bewegbarkeit der Teilstifte gegeneinander und auch zum Beaufschlagungsstift können diese Positionen einnehmen, um die Aufnahme des Ringes zu erleichtern, ihn anschliessend für die weitere Handhabung sicher zu halten und an seiner Endposition wieder einfach und schonend freizugeben.

Gemäss einer ersten Ausführungsform der Erfindung ist dabei vorgesehen, dass die zwei Teilstifte quer zu deren Längserstreckung bewegbar sind, um den Ring im Zug der Relativbewegung in eine gestreckte Form zu bringen. Damit kann der Ring in ebener Form aufgenommen und materialschonend in ebener Form transportiert und an seine Endposition verbracht werden.

Bevorzugt ist dabei weiters vorgesehen, dass der Beaufschlagungsstift und die Teilstifte quer zur Richtung der Relativbewegung der Teilstifte relativ zueinander bewegbar sind, so dass der Ring mit seiner durchmesserbezogenen Außenkontur zur Einführung in den rohrförmigen Kanal und Positionieren in den Bauteil einschiebbar ist. Durch die orthogonalen Bewegungsrichtungen der Bauteile können die dafür benötigten Aktoren optimal verbaut werden.

Gemäss einer bevorzugten Ausführungsform liegt eine der Endpositionen des Beaufschlagungsstiftes im Zuge der Relativbewegung zum Aufnahmestift zwischen den angenäherten Positionen der Teilstifte, um derart einen Umfangsabschnitt nach innen hin zu verformen und damit die Aussenkontur derart zu verkleinern, dass der Ring einfach und rasch in die Aufnahme des Bauteils eingeführt werden kann. In dieser Position und Form kann der Ring durch Zusammenbewegen der Teilstifte geklemmt und für die weitere Handhabung sicher gehalten werden.

Eine weitere bevorzugte Ausführungsform der erfindungsgemässen Montagevorrichtung ist dadurch gekennzeichnet, dass die Aussenkontur jedes der beiden Teilstifte zumindest in der Höhe, in welcher der Ring zu liegen kommt, vorzugsweise schalenförmig über zumindest ein Viertel des Umfangs des Ringes verläuft und eine nur geringfügig grössere Krümmung aufweist. Durch diese über einen grossen Bereich des Umfanges verlaufende Aussenkontur der Teilstifte ist ein schonendes Eindrücken des Ringes in die Innennut beim Entlangstreifen an der Innenkontur des Ringes gewährleistet werden. Der Ring kommt nur bei der rotatorischen Bewegung in Kontakt mit der Zylinderfläche des Bauteils, welche Art der Bewegung zu keiner Beschädigung in Längsrichtung führen kann, welche die Dichtfunktion einschränkt

Eine zweite grundlegende Ausführungsform der erfindungsgemässen Montagevorrichtung sieht vor, dass die zwei Teilstifte parallel zu deren Längserstreckung relativ zueinander bewegbar sind, und die Aussenkontur jedes der beiden Teilstifte zumindest über den axialen Längsabschnitt, in welchem der Ring zu liegen kommt, die äussere Begrenzung des Aufnahmestiftes darstellt und vorzugsweise schalenförmig über zumindest ein Viertel bis maximal über die Hälfte des Umfangs des Ringes verläuft. Damit kann insbesondere bei Ringen mit kleinerem Durchmesser und geringerer Dicke einfach die zum Einbringen in Bohrungen in Bauteilen kompakte Form gebracht werden. Durch das Fehlen äusserer Hüllrohren, Buchsen od.dgl. können mit einer einfach aufgebauten Anordnung noch kleinere Bohrungen bedient werden und es besteht keine Gefahr, dass der Dichtring im Inneren derartiger Umhüllungen steckenbleibt oder beim Einziehen und Hinausdrücken beschädigt wird.

Bevorzugt sind dabei an einem der Teilstifte benachbart dem Übergang zum zweiten Teilstift zwei Biegeschultern angeordnet, um den Ring im Zug der Relativbewegung in eine um eine quer zu Ringebene liegende Achse geknickte Form zu bringen. Damit kann eine noch kleiner Aussenkontur des verformten Ringes erreicht werden, um diesen sicher und rasch in besonders kleine Bohrungen einzubringen.

Dabei ist es besonders vorteilhaft, wenn eine Anordnung zur Führung der seitlichen Abschnitte des Ringes zu beiden Seiten der Bahn des Aufnahmestiftes angeordnet ist, welche Anordnung vorzugsweise den Ring seitlich und unterhalb der Biegeschultern auf den Aufnahmestift hin verformende Abschnitte aufweist. Damit wird der Ring einerseits in eine für das nachfolgende Hochziehen am Aufnahmestift vorverformt und es wird gleichzeitig sichergestellt, dass der Ring nicht über die Biegeschultern oder ähnliche Strukturen nach aussen ausweichen kann, sondern während des Hochziehens um die Schultern herum gebogen und gezogen wird.

Gemäss einer weiteren erfindungsgemässen Ausführungsform ist eine derartige Montagevorrichtung dadurch gekennzeichnet, dass die Endposition der parallelen Relativbewegung der Teilstifte derart gewählt, dass der Ring zumindest nach Erreichen dieser Endposition in einer geknickten und gestreckten Form vorliegt. Dies gestattet eine nochmals in der axialen Aufsicht verkleinere Aussenkontur zur Beschickung von sehr kleinen Bohrungen mit Innennut mit dem Ring.

Bevorzugt weist die Montagevorrichtung dazu an einem der Teilstifte eine zumindest teilringförmige umlaufende Aufnahme oder eine Anlageschulter für den Ring und am anderen Teilstift entgegengesetzt der Endposition einen den Ring hintergreifenden Vorsprung auf.

Eine einfache und funktionssichere Montagevorrichtung ist optional weiter dadurch gekennzeichnet, dass in einer Endposition der beiden Teilstifte komplementär durch beide Teilstifte eine umlaufende Schulter oder eine kegelstumpfförmige Durchmesservergrösserung zum Eindrücken des Ringes in die Nut ausgebildet ist. Damit kann in jedem Fall und unabhängig von den Materialeigenschaften des Ringes, insbesondere von dessen Elastizität, sichergestellt werden, dass der Ring sicher und vollständig in die Innennut eingebracht ist.

Bevorzugt sind in jeder der oben erläuterten Ausführungsformen der Vorrichtung separate Aktoren für die Relativbewegung der Teilstifte und für die Radialbewegung des Aufnahmestiftes und des Beaufschlagungsstiftes vorhanden.

Die Erfindung betrifft zur Lösung der eingangs gestellten Aufgaben auch ein Verfahren, bevorzugt unter Verwendung der oben erläuterten Montagevorrichtung, welches zusätzlich zum Aufnehmen eines Ringes mittels eines in zumindest zwei Teilstifte geteilten Aufnahmestiftes, Verformen des Rings an einer Stelle zur Ringmitte hin, mittels eines Beaufschlagungsstiftes, Klemmen des verformten Ringes zwischen dem Aufnahmestift und dem Beaufschlagungsstift, Einbringen des verformten Ringes an die Stelle der Innennut in den Bauteil, Freigeben des Ringes unter Rückformung in die Ringform durch Auseinanderfahren des Aufnahmestiftes und des Beaufschlagungsstiftes, Eindrücken des Ringes in die Ringnut durch Auseinanderbewegen von Aufnahmestift und Beaufschlagungsstift sowie durch Drehen der Anordnung von Aufnahmestift und Beaufschlagungsstift um die Mittelachse der Bohrung mit der Innennut, erfindungsgemäss dadurch gekennzeichnet ist, dass beim Aufnehmen des Ringes die beiden Teilstifte des Aufnahmestiftes auseinanderbewegt und der Ring damit in längliche Form gezogen wird, wobei der Durchmesser des Ringes in einer Richtung quer zur Bewegungsrichtung der Teilstifte verringert wird.

Eine sichere Handhabung bei wesentlicher Verringerung des Aussendurchmessers des Ringes ist erzielbar, wenn gemäss einer ersten Ausführungsvariante der Ring nach Verformung in längliche Form und anschliessendes Verformen des Rings an einer Stelle zur Ringmitte hin mittels des Beaufschlagungsstiftes für das Einbringen in den Bauteil zwischen den Teilstiften und dem Beaufschlagungsstift geklemmt wird.

Dabei ist es weiter bevorzugt, wenn der Ring nach Verformung in längliche Form und anschliessendes Verformen des Rings an einer Stelle zur Ringmitte hin mittels des Beaufschlagungsstiftes für das Einbringen in den Bauteil zwischen den Teilstiften und dem Beaufschlagungsstift geklemmt wird.

Bei einer optionalen Variante des erfindungsgemässen Verfahrens, bei welcher der Ring zumindest mittels der Aussenkonturen der allenfalls radial auseinanderbewegten Teilstifte, vorzugsweise durch zusätzliches Beaufschlagen der Innenseite des Ringes von innen her in radialer Richtung mittels des Beaufschlagungsstiftes, unter Drehung der Anordnung von Teilstiften und Beaufschlagungsstift weiter in die Nut gedrückt wird, ist sichergestellt, dass der Ring materialschonend und bestmöglich in die Nut eingedrückt wird.

Eine andere Variante des Verfahrens zum Positionieren von flexiblen Ringen, insbesondere von O-Ringen, Dicht- oder Abstreifringen, in Innennuten von Bauteilen, vorzugsweise unter Verwendung einer Montagevorrichtung mit einem Aufnahmestift aus zumindest zwei in Längsrichtung parallel angeordneten und relativ zueinander bewegbaren Teilstiften, die parallel zu deren Längserstreckung relativ zueinander bewegbar sind, wobei deren Aussenkontur zumindest über den axialen Längsabschnitt, in welchem der Ring zu liegen kommt, die äussere Begrenzung des Aufnahmestiftes darstellt und vorzugsweise schalenförmig über zumindest ein Viertel bis maximal über die Hälfte des Umfangs des Ringes verläuft, ist gekennzeichnet durch Klemmen des Ringes zwischen dem Aufnahmestift und dem Beaufschlagungsstift durch radiale Abstandsverkleinerung zwischen Aufnahmestift und Beaufschlagungsstift, Hochbiegen eines Abschnittes des Ringes aus der ursprünglichen Ringebene durch parallele Relativbewegung, wobei gleichzeitig der Ring damit in längliche Form gezogen und der Durchmesser des Ringes in einer Richtung verringert wird, Einbringen des verformten Ringes an die Stelle der Innennut in den Bauteil, Freigeben des Ringes unter Rückformung in die Ringform durch paralleles Bewegen der Teilstifte in die Ausgangsposition bei Aufnehmen des Ringes, und Eindrücken des Ringes in die Ringnut durch axiales Bewegen des Aufnahmestiftes, um einen Abschnitt grösseren Durchmessers in die Höhe des Ringes zu bringen.

Damit können mit relativ einfachen Verfahrensschritten und Bewegungen der beteiligten Komponenten der einfach aufgebauten Montagevorrichtung Ringe schonend und rasch auch in Innennuten in Bohrungen mit kleinsten Durchmessern eingebracht und sicher in den Innennuten platziert werden.

Bevorzugt ist eine Variante dieses Verfahrens, bei welcher der Ring während der Abstandsverkleinerung zwischen Aufnahmestift und Beaufschlagungsstift von beiden Seiten her auf den Aufnahmestift hin verformt und vorzugsweise bis zum Beenden des Hochziehens mittels der parallelen Relativbewegung der Teilstifte seitlich an den Aufnahmestift angedrückt wird. Damit wird der Ring einerseits in eine für das nachfolgende Hochziehen am Aufnahmestift vorverformt und es wird gleichzeitig sichergestellt, dass der Ring nicht über die Biegeschultern oder ähnliche Strukturen nach aussen ausweichen kann, sondern während des Hochziehens um die Schultern herum gebogen und gezogen wird.

Eine optionale Variante dieses Verfahrens sieht vor, dass der Ring durch Drehen des Aufnahmestiftes um seine Längsachse oder durch Entlangbewegen des Aufnahmestiftes in die Nut eingedrückt wird. Dies ergibt eine nochmalige Verbesserung bei Eindrücken des Ringes in die Innennut.

Zum besseren Verständnis der Erfindung wird diese anhand der nachfolgenden Figuren näher erläutert.

Es zeigen jeweils in stark vereinfachter, schematischer Darstellung:
- Fig. 1: Eine perspektivische Ansicht der relevanten Komponenten der erfindungsgemässen Montagevorrichtung
- Fig. 2: Einen Schnitt parallel zur Richtung der Relativbewegung von Aufnahmestift und Beaufschlagungsstift
- Fig. 3: Einen Schnitt durch die Anordnung von Aufnahmestift und Beaufschlagungsstift in der Ausgangsposition
- Fig. 4: Eine perspektivische Ansicht zu Beginn der Entnahme eines Ringes aus einer Fetteinheit
- Fig. 5: Eine perspektivische Ansicht der Aufnahme des Ringes in der Fetteinheit durch den Aufnahmestift
- Fig. 6: Eine perspektivische Ansicht der Verformung des Ringes in der Fetteinheit durch den Beaufschlagungsstift
- Fig. 7: Eine perspektivische Ansicht der Klemmung des Ringes in der Fetteinheit durch den Aufnahmestift
- Fig. 8: Eine perspektivische Ansicht der Aufnahme des Ringes in der Fetteinheit durch den Aufnahmestift
- Fig. 9: Eine perspektivische Ansicht zu Ende der Aufnahme des im Aufnahmestift geklemmten Ringes aus der Fetteinheit
- Fig. 10: Einen Längsschnitt durch die Anordnung von Aufnahmestift und Beaufschlagungsstift mit dem geklemmten Ring für die Entnahme aus der Fetteinheit
- Fig. 11: Einen Längsschnitt orthogonal zum Schnitt der Fig. 10, während des Klemmvorganges des Ringes in der Fetteinheit
- Fig. 12: Eine perspektivische Ansicht, teilweise transparent, vor dem Einsetzen des Ringes in die Innennut eines Bauteils
- Fig. 13: Ein weiterer Schritt beim Einsetzen des Ringes in die Innennut
- Fig. 14: bis Fig. 22 Jeweils eine perspektivische Ansicht des Endes des Aufnahmestiftes mit dem geklemmten Ring in Höhe der Innennut des Bauteils in verschiedenen relevanten Stadien des erfindungsgemässen Verfahrens
- Fig. 23: Eine perspektivische Ansicht des Endes des Aufnahmestiftes mit dem geklemmten Ring in Höhe der Innennut des Bauteils zum Ende des Einsetzens des Ringes
- Fig. 24: Einen Längsschnitt des Endes des Aufnahmestiftes mit dem geklemmten Ring in Höhe der Innennut des Bauteils zu Beginn des Einsetzens des Ringes
- Fig. 25: Einen Längsschnitt des Endes des Aufnahmestiftes mit dem geklemmten Ring in Höhe der Innennut des Bauteils im weiteren Zuge des Einsetzens des Ringes in die Innennut
- Fig. 26: Ein vergrössertes Detail der Innennut und des schon teilweise eingesetzten Dichtringes
- Fig. 27: Einen Schnitt quer zur Längsachse des Aufnahmestiftes durch die Anordnung von Aufnahmestift, Beaufschlagungsstift und Dichtring in einem Zwischenstadium während des Einsetzens in die Innennut
- Fig. 28: Eine perspektivische Ansicht der relevanten Komponenten der erfindungsgemässen Montagevorrichtung gemäss einer zweiten grundlegenden Ausführungsform der Erfindung, zu Beginn der Aufnahme eines Ringes aus einer Fetteinheit
- Fig. 29: Einen Längsschnitt und einen orthogonalen Querschnitt durch die Komponenten der Fig. 28
- Fig. 30: Eine perspektivische Ansicht der Komponenten der Fig. 28 in einem nächsten Stadium während der Aufnahme des Ringes in der Fetteinheit durch den Aufnahmestift
- Fig. 31: Einen Längsschnitt und einen orthogonalen Querschnitt durch die Komponenten der Fig. 30
- Fig. 32: Eine perspektivische Ansicht der Komponenten der Fig. 28 nach der ersten Kontaktnahme von Ring und Aufnahmestift während der Aufnahme des Ringes in der Fetteinheit durch den Aufnahmestift
- Fig. 33: Einen Längsschnitt und einen orthogonalen Querschnitt durch die Komponenten der Fig. 32
- Fig. 34: Eine perspektivische Ansicht der Komponenten der Fig. 28 nach Kontaktnahme von Aufnahmestift und Beaufschlagungsstift während der Aufnahme des Ringes in der Fetteinheit durch den Aufnahmestift
- Fig. 35: Einen Längsschnitt und einen orthogonalen Querschnitt durch die Komponenten der Fig. 34
- Fig. 36: Eine perspektivische Ansicht der Komponenten der Fig. 28 nach der Relativbewegung der beiden Teilstifte des Aufnahmestiftes zur Aufspannung und Aussenkonturverkleinerung des Ringes während dessen Aufnahme
- Fig. 37: Einen Längsschnitt und einen orthogonalen Querschnitt durch die Komponenten der Fig. 36
- Fig. 38: Eine perspektivische Ansicht der Komponenten der Fig. 28 nach der Entnahme des auf dem Aufnahmestift geklemmten bzw. aufgespannten Ringes aus der Fetteinheit
- Fig. 39: Einen Längsschnitt und einen orthogonalen Querschnitt durch die Komponenten der Fig. 38
- Fig. 40: Eine perspektivische Ansicht der Komponenten der Fig. 28 während des Einbringens des geklemmten Ringes in die Innennut eines Bauteils, mit den Teilstiften in der Stellung der Fig. 38 zueinander
- Fig. 41: Einen Längsschnitt und einen orthogonalen Querschnitt durch die Komponenten der Fig. 40
- Fig. 42: Eine perspektivische Ansicht der Komponenten der Fig. 28 während des Einbringens des geklemmten Ringes in die Innennut eines Bauteils, mit den Teilstiften in der Stellung der Fig. 38 zueinander
- Fig. 43: Einen Längsschnitt und einen orthogonalen Querschnitt durch die Komponenten der Fig. 42
- Fig. 44: Eine perspektivische Ansicht der Komponenten der Fig. 28 während eines späteren Stadiums des Einbringens des Ringes in die Innennut eines Bauteils, mit den Teilstiften in der Ausgangsstellung der Fig. 28 zu Beginn der Aufnahme des Ringes
- Fig. 45: Einen Längsschnitt und einen orthogonalen Querschnitt durch die Komponenten der Fig. 44
- Fig. 46: Eine perspektivische Ansicht der Komponenten der Fig. 28 während des finalen Stadiums des Einbringens des Ringes in die Innennut eines Bauteils, mit Einwirkung des Aufnahmestiftes auf den Innenumfang des Ringes zum Eindrücken in die Innennut
- Fig. 47: Einen Längsschnitt und einen orthogonalen Querschnitt durch die Komponenten der Fig. 46
- Fig. 48: Eine perspektivische Ansicht der Komponenten der Fig. 28 nach Einbringen des Ringes in die Innennut eines Bauteils, mit wieder zurückgezogenem Aufnahmestift und in der Innennut befindlichem Ring
- Fig. 49: Einen Längsschnitt und einen orthogonalen Querschnitt durch die Komponenten der Fig. 48
- Fig. 50: Eine perspektivische Ansicht einer vorteilhaften Ausführungsform des unteren Endes eines Aufnahmestiftes
- Fig. 51: Eine Ansicht des Aufnahmestiftes der Fig. 50 mit geklemmtem Ring
- Fig. 52: bis Fig. 65 zeigen jeweils Querschnitte durch die Teilstifte und den Beaufschlagungsstift knapp oberhalb der Ebene des Ringes in verschiedenen Stadien des Aufnehmens, Klemmens am Aufnahmestift und Einbringen in die Innennut sowie Eindrücken in die Innennut bis zur vollständigen Montage im Bauteil

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

### FIGURENBESCHREIBUNG

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

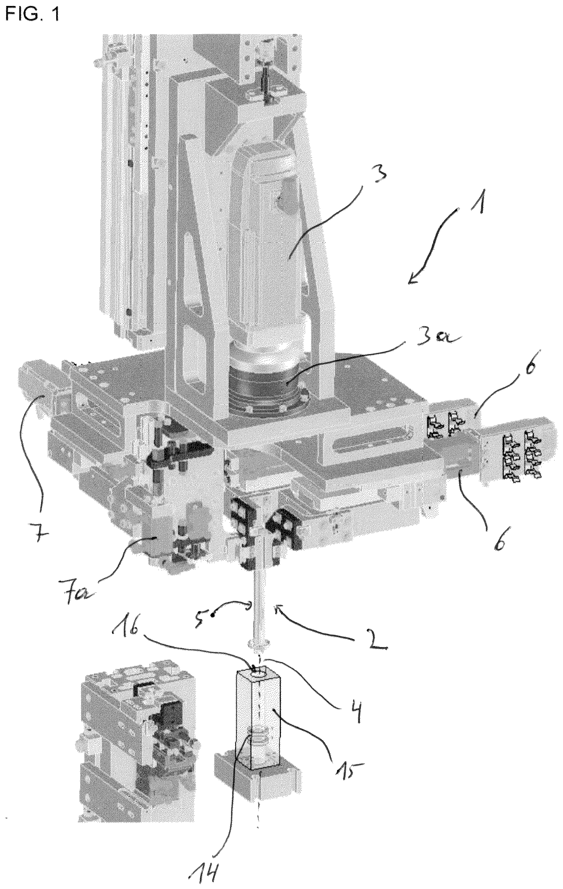

Die Fig. 1 zeigt den grundlegenden Aufbau einer speziellen, beispielhaften Montagevorrichtung 1 zum Aufnehmen und Positionieren von flexiblen Ringen, insbesondere von insbesondere von O-Ringen, Formdichtungen, Dicht- oder Abstreifringen, in Innennuten von Bauteilen. Die eigentliche Montagevorrichtung 1 mit einem in alle orthogonalen Richtungen verfahrbaren Aufnahmestift 2 ist in einem hier nicht dargestellten Maschinenrahmen mittels eines horizontalen Hauptantriebes entlang vorzugsweise einer Geraden vorwärts und rückwärts verfahrbar und mittels eines vertikalen Hauptantriebes 3 entlang einer Geraden absenkbar und anhebbar. Der Aufnahmestift 2 kann optional mittels eines separaten Antriebs 3a oder auch durch den vertikalen Hauptantrieb 3 selbst um seine zentrale Längsachse gedreht werden.

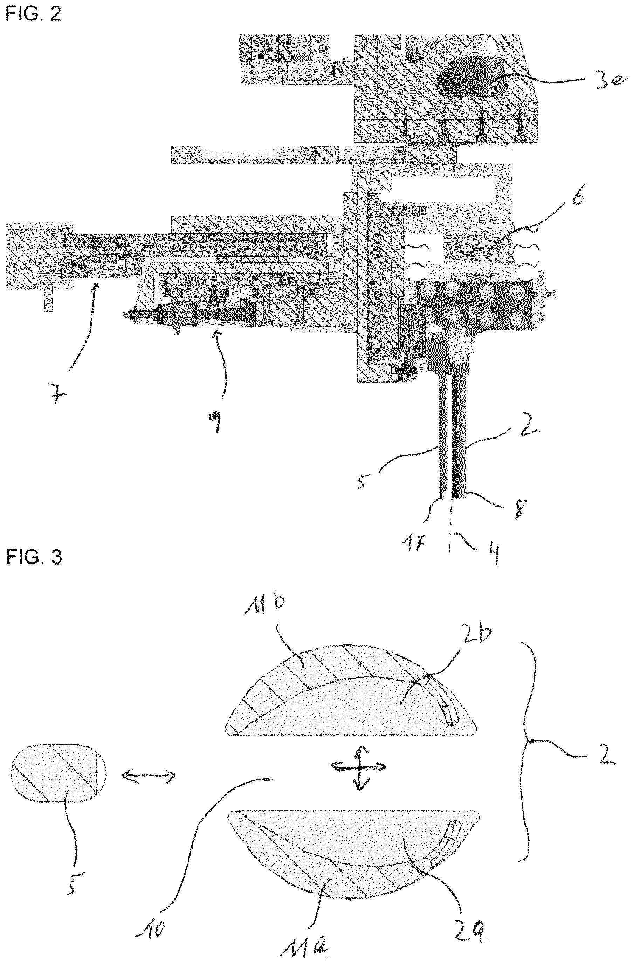

Der Aufnahmestift 2 ist entlang seiner Längsachse 4 - die in den Zeichnungsfiguren vertikal verläuft - in zumindest zwei Teilstifte 2a, 2b unterteilt, die separat mittels Aktoren 6 entlang einer Geraden auseinander oder aufeinander zu bewegbar sind. Wie in Fig. 2 gut zu erkennen ist, kann am Ende des Aufnahmestiftes 2 zumindest eine zumindest teilringförmig umlaufende Aufnahme in Form von vorzugsweise einer Nut 8 oder eine Anlageschulter für den Ring zur genauen Positionsdefinition vorhanden sein.

Als weitere, auf den flexiblen Ring einwirkende Komponente ist ein Beaufschlagungsstift 5 vorgesehen, der parallel zum Aufnahmestift 2 verläuft und mittels eines weiteren Aktors 7 in einer Richtung quer zur Längserstreckung des Aufnahmestiftes 2 relativ dazu verfahrbar ist. Vorzugsweise ist die Richtung der Bewegbarkeit des Beaufschlagungsstiftes 5 quer zur Richtung der Relativbewegung der Teilstifte 2a, 2b orientiert. Über einen weiteren Aktor ist der Beaufschlagungsstift 5 auch axial anhebbar und absenkbar, parallel zum Aufnahmestift 2.

In Fig. 2 ist weiters noch - beispielhaft für alle Aktorenanordnungen - ein Kraft-sensor 9 zur Überwachung der Bewegung des Beaufschlagungsstiftes 5 dargestellt. Die individuelle Ansteuerung der einzelnen Stifte 2, 5 macht parallele Bewegung möglich, diese sind zeitsparend bzw. reduzieren die gesamte Montagezeit.

Wie auch bereits aus dem Stand der Technik bekannt ist, kann ein auf dem Aufnahmestift 2 befindlicher Ring durch die Wirkung des Beaufschlagungsstiftes 5 derart verformt werden, dass der Ring mit seiner durchmesserbezogenen Außenkontur zur Einführung in den rohrförmigen Kanal und Positionieren in einen Bauteil einschiebbar und dort in eine Innennut einbringbar ist. Wie dies mittels der erfindungsgemässen Vorrichtung in neuer und vorteilhafter Weise erfolgt, wir nachfolgend erläutert.

Fig. 3 zeigt in einem Querschnitt in Höhe der Aufnahme bzw. Nut 8 des Aufnahmestiftes 2, wobei durch die Pfeile die Bewegungsmöglichkeiten der einzelnen Teilstifte 2a, 2b und des Beaufschlagungsstiftes 5 gezeigt sind. Weiters ist zu erkennen, dass selbst bei ganz angenäherten Teilstiften 2a, 2b zwischen diesen Komponenten ein Freiraum 10 verbleibt, in welchem einerseits ein nach innen hin verformter Abschnitt des Ringes aufgenommen werden kann, und in welchen auch der Beaufschlagungsstift 5 hinein verfahren werden kann, vorzugsweise um diese Verformung des Ringes zu bewirken, allenfalls auch, um dann von innen her auf die Innenkontur des Ringes einzuwirken und diesen in die Innennut im Bauteil einzudrücken, wie auch nachfolgend noch erläutert wird.

Die Aussenkontur der Teilstifte 2a, 2b ist, bevorzugt zumindest in der Höhe, in welcher der Ring zu liegen kommt, durch konvex schalenförmige Abschnitte bzw. gebogene Montageschilde 11a, 11b gebildet. Diese erstreckten sich über zumindest ein Viertel des Umfangs des Ringes und weisen bevorzugt eine nur geringfügig grössere Krümmung als der jeweils aufzunehmende Ring auf.

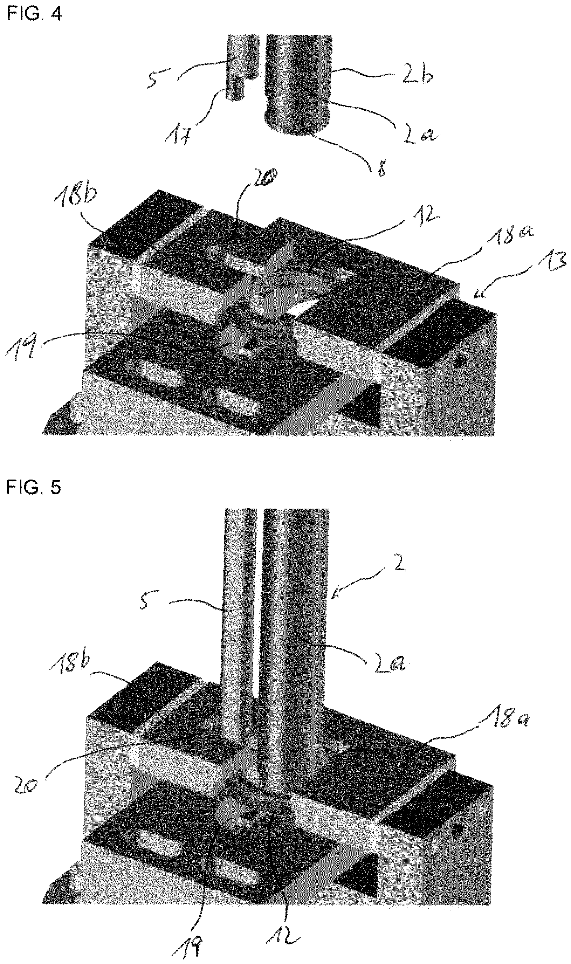

Unter Bezugnahme auf die Fig. 4 bis 27 wird nun die Verwendung einer erfindungsgemässen Montagevorrichtung gemäss den Fig. 1 bis 3 zur Entnahme beispielsweise eine Dichtringes 12 aus einer Fetteinheit 13 oder einer beliebigen anderen Zuführeinheit und zu dessen Einbau in eine Innennut 14 eines Bauteils 15 durch eine Zugangsbohrung 16 näher erläutert. Bevorzugt werden alle Bewegungen durch mit Kraft- und/oder Wegsensoren überwachte Aktoren bewirkt. Diese Ausführungsform ist besonders vorteilhaft einsetzbar für Formdichtungen und Trenndichtungen, natürlich auch für O-Ringe.

Fig. 4 offenbart auch ein besonders vorteilhaftes Detail des Beaufschlagungsstiftes 5, nämlich dessen fingerartige Verlängerung 17, die über eine Schulter in den breiteren Abschnitt des Beaufschlagungsstiftes 5 übergeht.

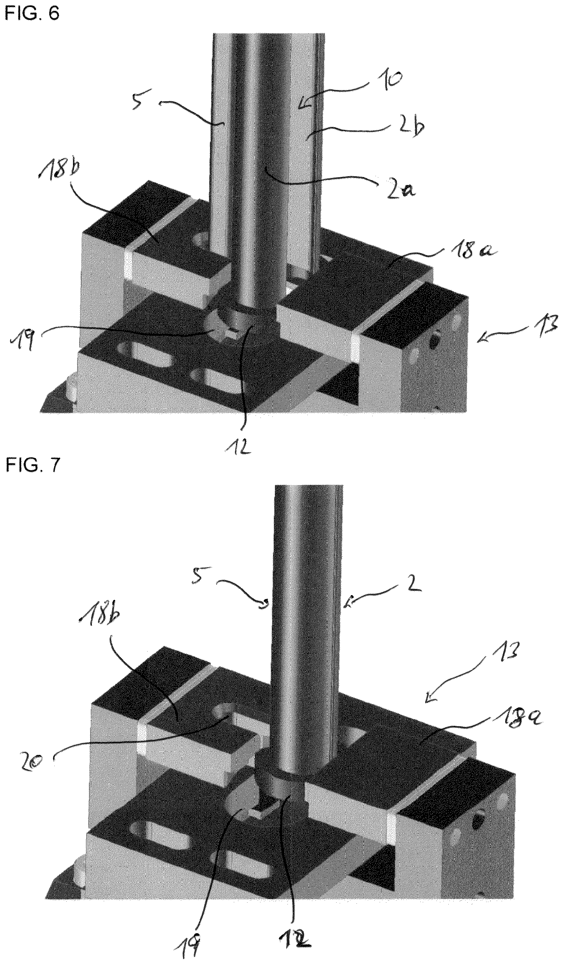

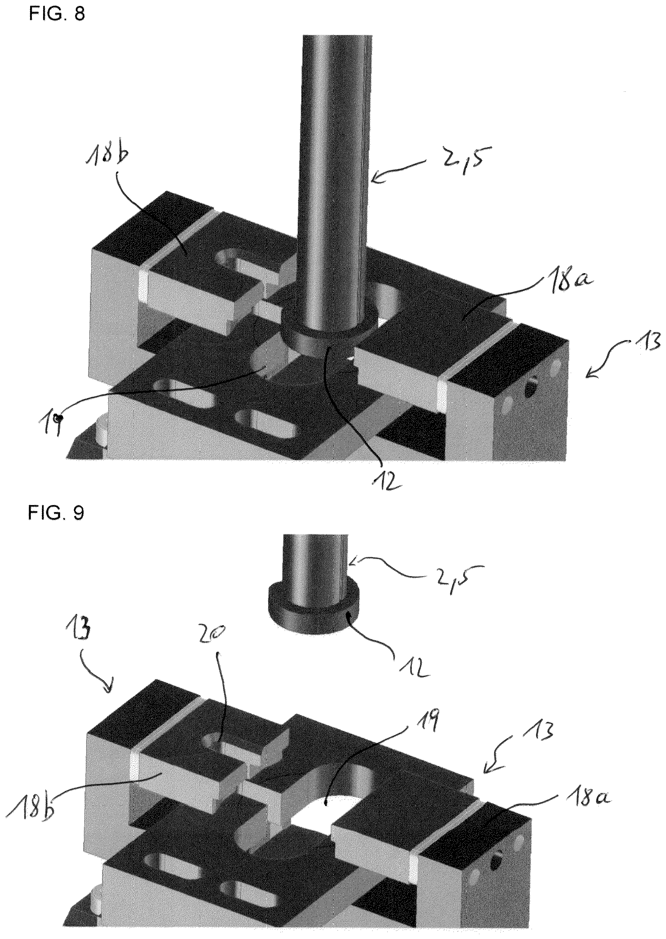

In der Fetteinheit 13 ist der Ring 12 in einer Halterung 18 oberhalb einer länglichen Öffnung 19 bereitgestellt, wobei die Halterung 18 zwei einander gegenüberliegenden Haltebacken 18a, 18b umfasst, die automatisch in die in Fig. 5 gezeigte Haltestellung und in eine später in Fig. 8 und 9 gezeigte Freigabestellung gebracht werden können. Eine der Haltebacken 18b weist eine Ausnehmung 20 auf, in welche der Beaufschlagungsstift 5 einfahren kann, wenn dieser vom Aufnahmestift 2 entfernt positioniert ist. Diese Stellung der Montagevorrichtung ist in Fig. 5 und 6 dargestellt. Dabei ist der Aufnahmestift 2 mit maximal angenäherten Teilstiften 2a, 2b in das Innere des Dichtringes 12 eingefahren, bis die Aufnahmenut 8 in Höhe des Dichtringes 12 zu liegen kommt. Der Beaufschlagungsstift 5 ist parallel zum Aufnahmestift 2 angeordnet und liegt mit seinem unteren Ende und mit der Verlängerung 17 in der Ausnehmung 20, wobei die Verlängerung 17 sich ausserhalb der Aussenkontur des Dichtringes 12 befindet.

Der nächste Verfahrensschritt ist in Fig. 6 dargestellt und umfasst das Auseinanderbewegen der Teilstifte 2a, 2b derart, dass der Dichtring 12 noch in der Fetteinheit 13 aus der kreisrunden Form im Zuge der Relativbewegung der Teilstifte 2a, 2b in eine gestreckte Form mit zwei parallel verlaufenden Abschnitten aufgedehnt wird. Die beiden gerundeten Abschnitte des Dichtringes 12 kommen in der Aufnahmenut 8 des Aufnahmestiftes 2 zu liegen, womit eine genau definierte Position sichergestellt und während der weiteren Handhabung des Ringes 12 eine sichere Haltewirkung gewährleistet ist.

Anschliessend wird, wie in Fig. 7 gezeigt ist, der Beaufschlagungsstift 5 quer zur Richtung der Relativbewegung der Teilstifte 2a, 2b relativ auf diese zu bewegt, so dass die Verlängerung 17 an einem der parallel verlaufenden Abschnitte des Ringes 12 anliegt und im weiteren Verlauf der Bewegung diesen Abschnitt zur Mitte des Ringes 12 und auf die Längsachse 4 des Aufnahmestiftes 2 hin verformt. Die Schulter zwischen Verlängerung 17 und breiterem Abschnitt des Beaufschlagungsstiftes 5 kann an der Oberseite des Dichtringes 12 aufliegen und damit zur sicheren Positionierung beitragen. Auch die Teilstifte 2a, 2b werden gleichzeitig dazu oder kurz danach wieder aneinander angenähert, so dass der Beaufschlagungsstift 5 im Freiraum 10 dazwischen zu liegen kommt und der nun nach innen hin gekrümmt verformte Abschnitt zwischen den Teilstiften 2a, 2b und der Verlängerung 17 des Beaufschlagungsstiftes 5 geklemmt ist, der Ring 12 in etwa B-förmiger Form vorliegt und mit seiner durchmesserbezogenen Außenkontur zur Einführung in den rohrförmigen Kanal der Zuführungsbohrung 16 und Positionieren in der Innennut 14 des Bauteils 15 einschiebbar ist.

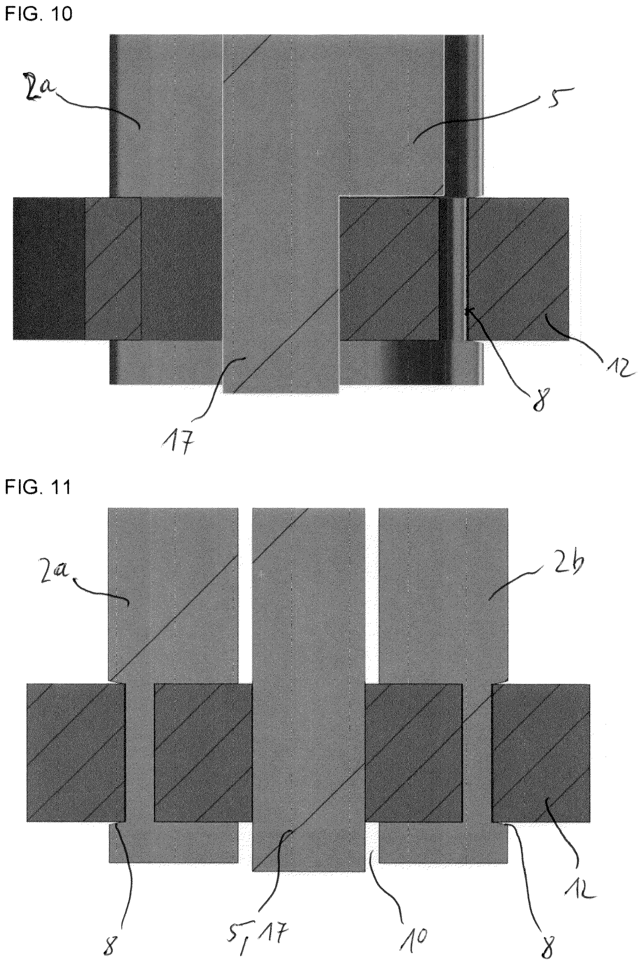

Die Haltebacken 18a, 18b werden nun, wie in Fig. 8 gezeigt ist, auseinandergefahren und die Anordnung aus Aufnahmestift 2 und Beaufschlagungsstift 5 mit dem geklemmten Dichtring 12 kann aus der Fetteinheit 13 in eine Position wie beispielsweise in Fig. 9 dargestellt herausbewegt werden. Ein Längsschnitt dieser Anordnung entlang der Längsachse 4 des Aufnahmestiftes 2 ist in Fig. 10 dargestellt. Fig. 11 zeigt aus einer dazu orthogonalen Richtung einen Längsschnitt in einer Zwischenstellung der Teilstifte 2a, 2b und des Beaufschlagungsstiftes 5 im Laufe der Annäherung aller dieser Stifte 2a, 2b und 5, wie sie etwa der Fig. 6 entspricht.

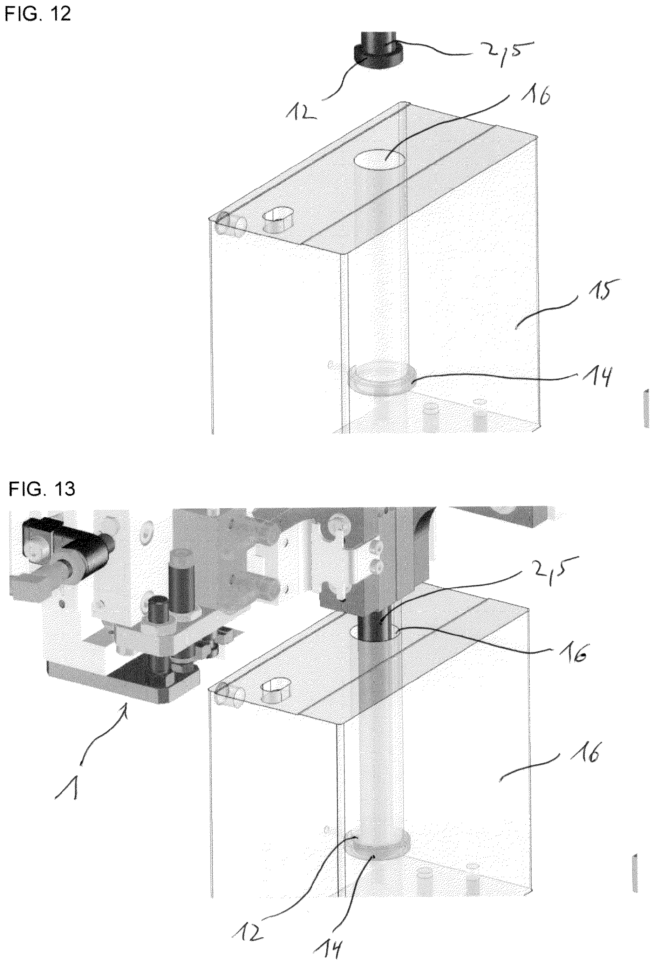

Mittels der Aktoren und/oder des Automatisierungssystems der Montagevorrichtung 1 kann die Anordnung aus Aufnahmestift 2 und Beaufschlagungsstift 5 mit dem geklemmten Dichtring 12 zum Bauteil 15 mit der Innennut 14 verfahren werden, wo schliesslich der Aufnahmestift 2 mit seiner Längsachse 4 fluchtend mit der Längsachse 21 der Zugangsbohrung 16 ausgerichtet wird, wie die Fig. 12 zeigt. Bevorzugt ist oberhalb der Zugangsbohrung 16 eine Zentriereinheit angeordnet, mit welcher die exakte Ausrichtung der Anordnung von Aufnahmestift 2 und Beaufschlagungsstift 5 in Bezug auf die Zugangsbohrung 16 sichergestellt werden kann. Die Zentriereinheit ist vorzugsweise schwimmend am Bauteil 15 mit der Zugangsbohrung 16 gelagert. Eine weitere bevorzugte Option ist die wiederkehrende Kontrolle der Ausrichtung bzw. Nulllage oder des Arbeitshubs aller Komponenten. Dazu kann beispielsweise vorgesehen sein, dass das Montagwerkzeug zyklisch in eine Negativkontur fährt. Stimmt die Position des Montagewerkzeuges nicht mehr, federt die Negativkontur ein und gibt eine entsprechende Rückmeldung.

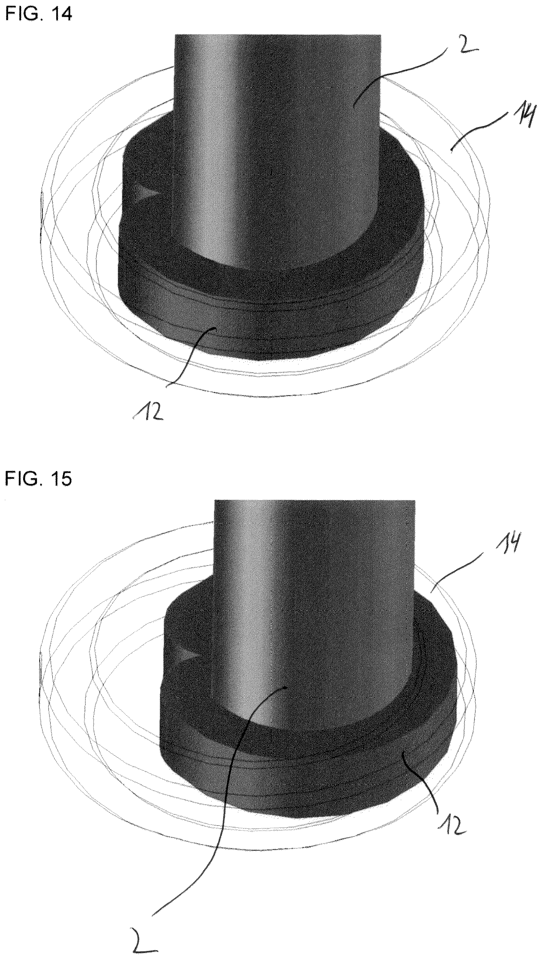

Nun kann der Dichtring 12 wie in Fig. 13 gezeigt durch Absenken der Anordnung aus Aufnahmestift 2 und Beaufschlagungsstift 5 in die Bohrung 16 eingebracht werden, bis er in Höhe der Innennut 14 liegt, welche Position in Fig. 14 gezeigt ist.

Anschliessend erfolgt eine in Fig. 15 gezeigte Seitwärtsbewegung der Anordnung aus Aufnahmestift 2 und Beaufschlagungsstift 5 mit dem geklemmten Dichtring 12, vorzugsweise in Richtung der Bewegung des Beaufschlagungsstiftes 5 beim Einfahren in den Freiraum zwischen den Teilstiften 2a, 2b. Damit wird der dem Beaufschlagungsstift 5 gegenüberliegende Abschnitt des Dichtringes 12 in die Innennut 14 eingedrückt.

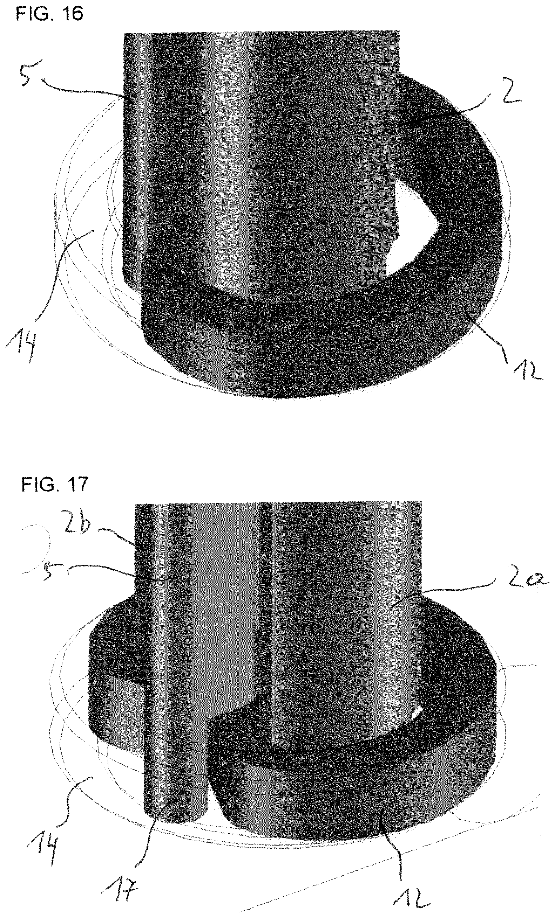

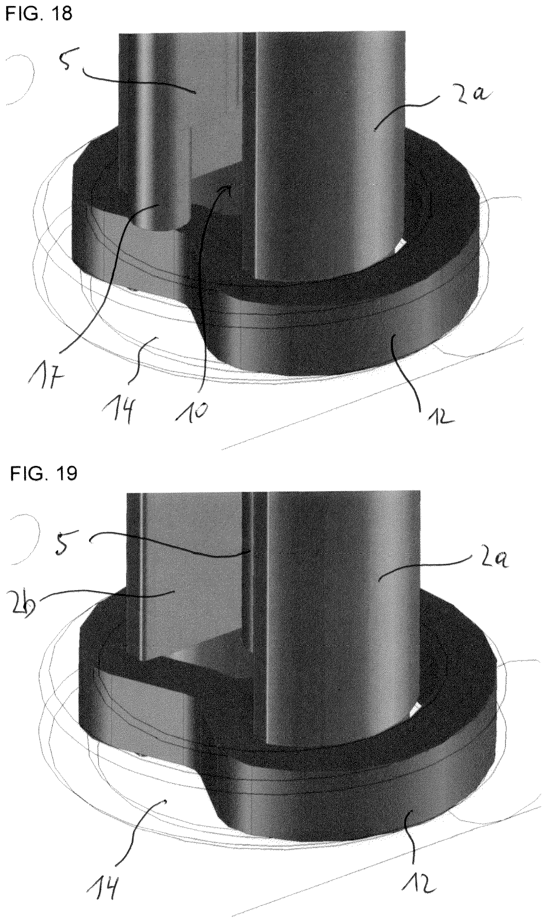

In einem weiteren, nachfolgenden Verfahrensschritt werden die Teilstifte 2a, 2b wieder auseinander bewegt, wie in Fig. 16 dargestellt ist, so dass die an diesen Teilstiften 2a, 2b anliegenden Abschnitte des Dichtringes 12 nun ebenfalls in die Innennut 14 eingedrückt werden. Dazu wird vorzugsweise gleichzeitig auch der Beaufschlagungsstift 5 wieder vom Aufnahmestift 2 weg gefahren, um ein Entspannen des Dichtringes 12 in seine ursprüngliche Form in die Innennut 14 hin zu ermöglichen. Fig. 17 zeigt diese Position der Anordnung aus Aufnahmestift 2 und Beaufschlagungsstift 5 und dem bereits teilweise freigegebenen Dichtring 12 aus einer etwas anderen Richtung. Nun kann der Beaufschlagungsstift 5 parallel zum Aufnahmestift 2 angehoben werden, so dass der bislang nach innen verformte Abschnitt sich entspannen und wieder von der Mitte des Dichtringes 12 bzw. der Längsachse 4 des Aufnahmestiftes 2 nach aussen hin bewegen kann. Diese Position ist in Fig. 18 aus der gleichen Richtung wie jener der Fig. 17 gezeigt.

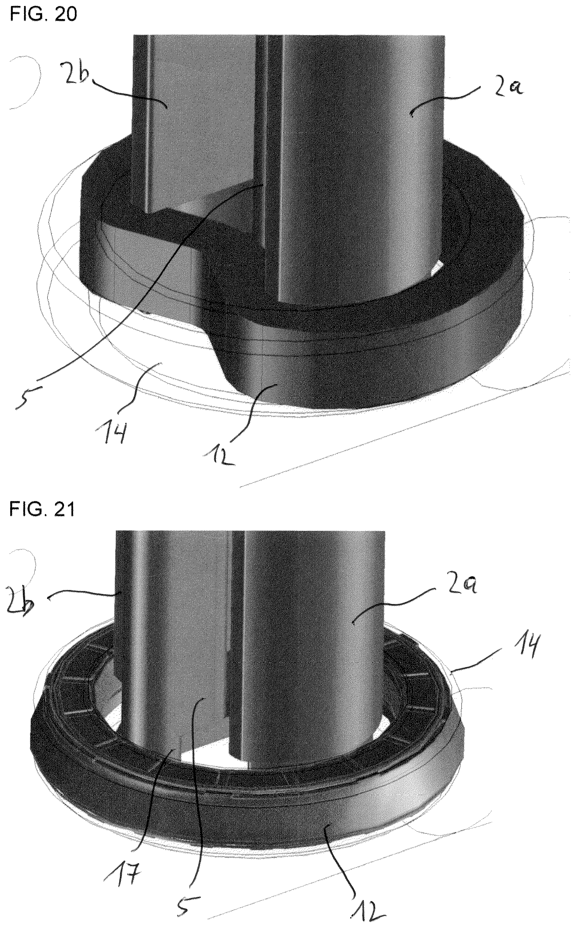

Fig. 19 und 20 zeigt die Anordnung im weiteren Zuge des Verfahren, bei welchem der Beaufschlagungsstift 5 wieder in den Freiraum 10 zwischen den voneinander entfernten Teilstiften 2a, 2b hineinbewegt und darin zumindest mit seiner Verlängerung 17 in die Höhe der Innenkontur des Dichtringes 12 abgesenkt wird. Danach wird der Beaufschlagungsstift 5 bzw. dessen Verlängerung 17 erneut aus dem Freiraum 10 heraus von der Mitte des Aufnahmestiftes 2 weg bewegt, an die Innenseite des Dichtringes 12 angelegt und weiter nach aussen verfahren, bis auch dieser Abschnitt in die Innennut 14 eingedrückt ist, welche Stellung in Fig. 21 dargestellt ist.

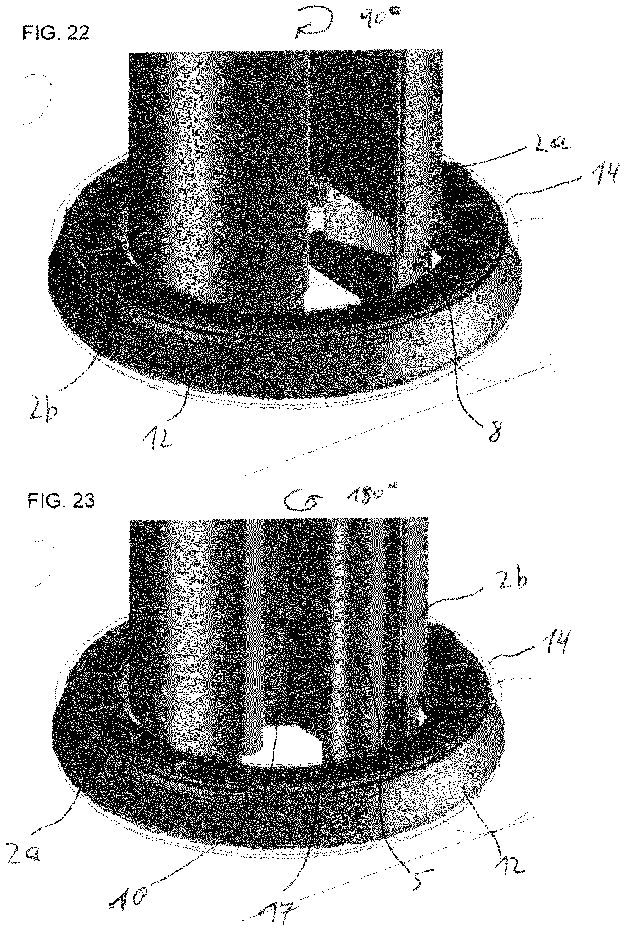

Optional kann anschliessend mittels Verdrehung der auseinandergefahrenen Teilstifte 2a, 2b und gegebenenfalls auch des maximal ausgefahren belassenen Beaufschlagungsstiftes 5 um die Längsachse der Stiftanordnung wird der Dichtring 12 rundum sicher in die Innennut 14 eingedrückt. Durch die Formgebung der Aussenkontur der Teilstifte 2a, 2b als Montageschilde 11a, 11b mit nur geringfügig grösserer Krümmung als jener der Innenkontur des Dichtringes 12, womit diese Montageschilde 11a, 11b über einen grossen Umfangsabschnitt an der Innenkontur des Dichtringes 12 anliegen, wird der Dichtring 12 dabei äusserst materialschonend eingedrückt und Beschädigungen werden weitestgehend vermieden. Bevorzugt wird zumindest einmal die Drehrichtung geändert, wobei weiter bevorzugt zumindest einer ersten Drehung in einer Drehrichtung um etwa 90° - wie in Fig. 22 angedeutet - zumindest eine zweite Drehung in die Gegenrichtung um etwa 180° - wie in Fig. 23 angedeutet - folgt.

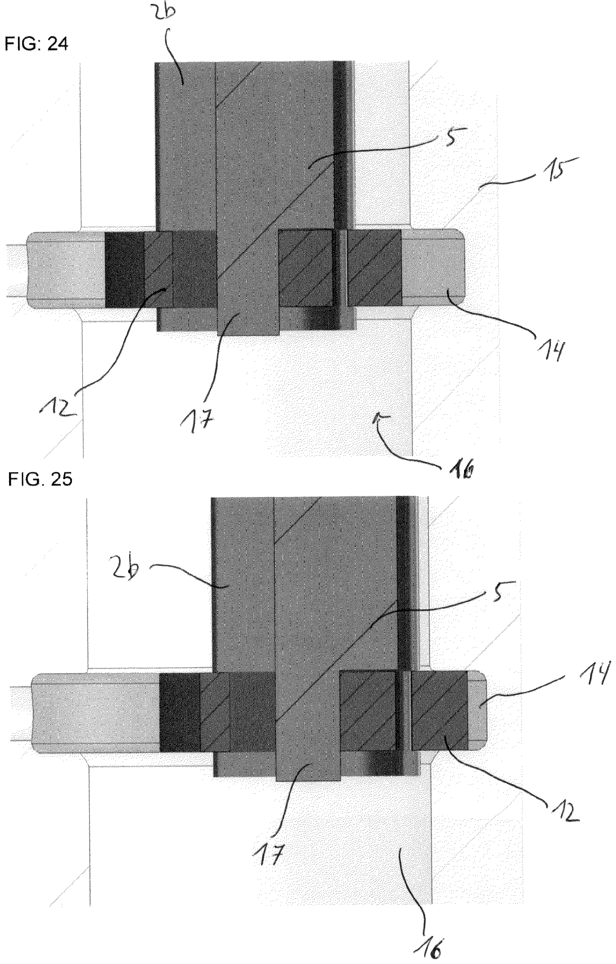

Die Längsschnitte der Fig. 24 bis 26 zeigen nochmals wichtige Verfahrensstadien in grösserem Massstab und Detail. So ist Fig. 24 eine Darstellung des Stadiums, bei welchem der Beaufschlagungsstift 5 quer zur Richtung der Relativbewegung der Teilstifte 2a, 2b zur Mitte in den Freiraum 10 zwischen die Teilstifte 2a, 2b bewegt ist, um derart einen Abschnitt zur Mitte des Ringes 12 und auf die Längsachse 4 des Aufnahmestiftes 2 hin zu verformen.

Fig. 25 zeigt die vorzugsweise kraftüberwachte Seitwärtsbewegung der Anordnung aus Aufnahmestift 2 und Beaufschlagungsstift 5 mit dem geklemmten Dichtring 12, vorzugsweise in Richtung der Bewegung des Beaufschlagungstiftes 5, beim Einfahren in den Freiraum zwischen den Teilstiften 2a, 2b. Damit wird der dem Beaufschlagungsstift 5 gegenüberliegende Abschnitt des Dichtringes 12 in die Innennut 14 zumindest teilweise eingedrückt.

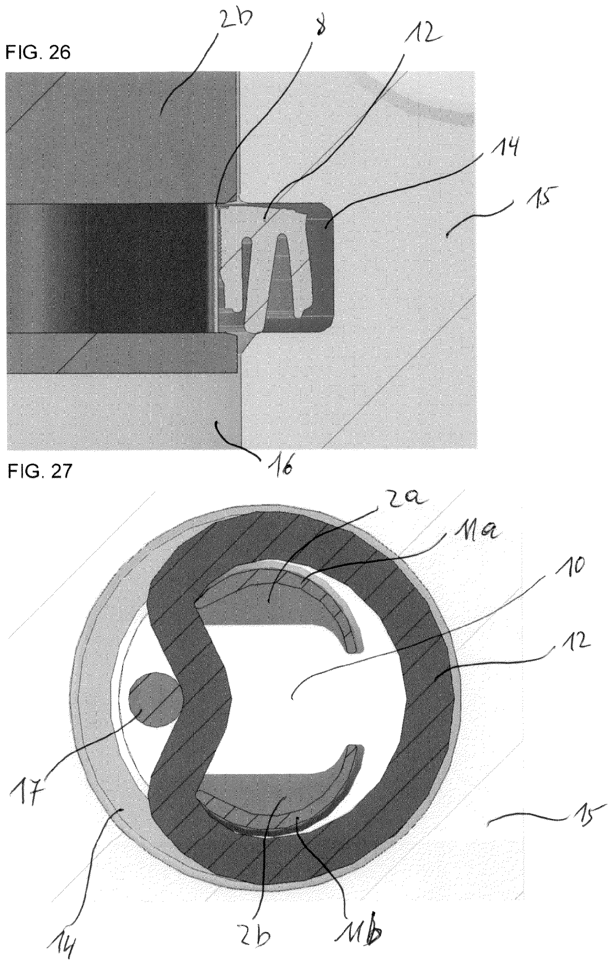

Fig. 26 zeigt in noch grösserem Massstab eine beispielhafte Ausführungsform eines Dichtringes 12 in Form einer Formdichtung im Querschnitt, teilweise in die Innennut 14 des Bauteils 15 eingedrückt.

Das seitliche Einführen der Abschnitte des Dichtringes 12 im Bereich der Montageschilder 11a, 11b der Teilstifte 2a, 2b ist in Fig. 27 dargestellt. Die Teilstifte 2a, 2b werden vorzugsweise gleichzeitig mit der Auseinanderbewegung in einer orthogonalen Richtung dazu auf den noch nicht in die Innennut 14 eingedrückten Abschnitt des Dichtringes 12 hin bewegt, um die Abschnitte des Ringes 12 in die Innennut 14 einzudrücken, die während der Klemmung des Dichtringes 12 in der Anordnung aus Aufnahmestift 2 und Beaufschlagungsstift 5 verformt war. Im Stadium der Fig. 27 ist die Verlängerung 17 des Beaufschlagungsstiftes 5 noch ausserhalb des Ringes 12, wird in die gleiche Richtung mitbewegt wie die Teilstifte 2a, 2b, und erst in einem späteren Stadium angehoben und ins Innere des Dichtringes 12 abgesenkt.

Neben der oben erläuterten Beweglichkeit in einer Richtung quer zur Richtung der Relativbewegung der Teilstifte 2a, 2b kann der Beaufschlagungsstift 5 gemäss einer weiteren Ausführungsform der Erfindung auch zusätzlich eine Beweglichkeit in einer Richtung achsparallel zu diesen Teilstiften 2a, 2b aufweisen. Während der Aktor 7 (siehe Fig. 1) die Bewegung des Beaufschlagungsstiftes 5 quer zur Richtung der Relativbewegung der Teilstifte 2a, 2b bewirkt, ist der Aktor 7a für die Bewegung in vorzugsweise vertikaler Richtung, jedenfalls aber quer zur Bewegungsrichtung des Aktors 7, zuständig.

Damit ist es möglich, den Ring 12 noch mehr zu verformen und dessen Umfangskontur noch weiter zu verkleinern. Dazu führt der Beaufschlagungsstift 5 simultan mit seiner Bewegung in den Freiraum 10 zwischen den Teilstiften 2a, 2b oder auch unmittelbar im Anschluss daran eine Bewegung vorzugsweise vom vorderen Ende des Aufnahmestiftes 2 weg, typischerweise also vertikal - in Richtung aus der Zugangsbohrung 16 heraus - auf und hebt damit den nach innen hin verformten Abschnitt des Ringes 12 über die ursprüngliche Ebene des unverformten Ringes auf. Danach kann der Beaufschlagungsstift 5 mit dem angehobenen Abschnitt weiter in der bisherigen Bewegungsrichtung quer zur Richtung der Relativbewegung der Teilstifte 2a, 2b verfahren werden, maximal bis der Beaufschlagungsstift 5 an der Innenkontur des Ringes 12 ansteht und der um ihn herum gebogene, aufgehobene Abschnitt vertikal fluchtend oberhalb des eben belassenen Abschnittes zu liegen kommt.

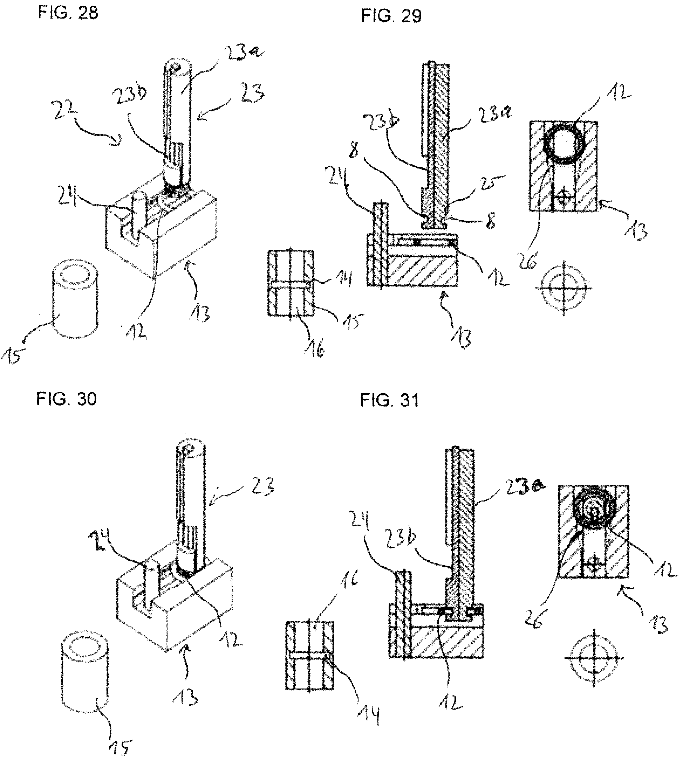

Die Fig. 28 bis 49 zeigen die Verwendung einer weiteren erfindungsgemässen Montagevorrichtung 22 zur Entnahme beispielsweise eine Dichtringes 12 aus einer Fetteinheit 13 oder einer beliebigen Zuführeinheit und zu dessen Einbau in eine Innennut 14 eines Bauteils 15 durch eine Zugangsbohrung 16. Wieder werden bevorzugt alle Bewegungen durch mit Kraft- und/oder Wegsensoren überwachte Aktoren bewirkt. Diese zweite Ausführungsform eignet sich wegen der dreidimensionalen Verformung optimal für O-Ringe, insbesondere mit im Verhältnis zum Nenndurchmesser kleinen Schnurdurchmessern.

Fig. 28 zeigt die Fetteinheit 13, an der bei dieser erfindungsgemässen Ausführungsform der Montagevorrichtung 22 ein feststehender Beaufschlagungsstift 24 ausgebildet ist. Selbstverständlich könnte der Beaufschlagungsstift 24 im Bereich der Zuführeinheit oder Fetteinheit 13 auch selbst in horizontaler Richtung über einen Aktor bewegbar vorgesehen sein.

Auch bei dieser weiteren Ausführungsform ist ein Aufnahmestift 23 zur Handhabung und zum Einsetzen des Dichtringes 12 in die Innennut 14 vorhanden und besteht aus zwei Teilstiften 23a, 23b, wie schon in Fig. 28 zu erkennen ist, noch deutlicher aber im Längsschnitt der Fig. 29. Im Gegensatz zur ersten Ausführungsform mit ihren quer zur Längserstreckung des Aufnahmestiftes 2 bewegbaren Teilstiften 2a, 2b sind die Teilstifte 23a, 23b der zweiten Ausführungsform der Montagevorrichtung 22 nun aber achsparallel zueinander verschiebbar und bilden gemeinsam und in komplementärer Konstruktion die Aussenkontur des Aufnahmestiftes 23. Dies wird in weiterer Folge bei der Darstellung und Erläuterung der zweiten Verfahrensvariante für das Einsetzen eines beispielsweise Dichtringes 12 in eine Innennut 14 erläutert.

Zu Beginn wird wieder in einer Fetteinheit 13 oder einer gleichartigen Zuführeinheit der Ring 12 bereitgestellt, wobei die Halterung nun aber einfacher und ohne bewegbare Haltebacken auskommt. Der Aufnahmestift 23 ist anfänglich oberhalb des Ringes 12 positioniert und die Längsachsen von Aufnahmestift 23 und Dichtring 12 fluchten miteinander, wie in Fig. 29 und 31 gut zu erkennen ist.

Wie in Längsschnitt und Querschnitt der Fig. 29 weiters gut zu erkennen ist, ist am Ende des Aufnahmestiftes 23 zumindest eine zumindest teilringförmig umlaufende Aufnahme in Form von vorzugsweise einer Nut 8 oder eine Anlageschulter für den Ring 12 zur genauen Positionsdefinition vorhanden. Der obere Begrenzungsrand dieser Nut 8 oder Schulter verläuft sich kegelförmig von der oberen Wandung der Nut 8 oder Schulter zum darüberliegenden Abschnitt des Aufnahmestiftes 23 erweiternd, oberhalb dieser Erweiterung der Aufnahmestift 23 dann mit im Wesentlichen konstantem, grösserem Durchmesser weiter nach oben zur Befestigungsstelle am jeweiligen Aktor verläuft.

In Fig. 30 ist der Aufnahmestift 23 mit noch unverändert verbliebenen Teilstiften 23a, 23b in das Innere des Dichtringes 12 eingefahren, bis die Aufnahmenut 8 in Höhe des Dichtringes 12 zu liegen kommt. Der Dichtring 12 liegt dabei konzentrisch zum Aufnahmestift 23 in Abstand um den Aufnahmestift 23 herum, wie gut aus Fig. 31 ersehen werden kann. Der Beaufschlagungsstift 24 ist parallel zum Aufnahmestift 23 angeordnet und noch beabstandet davon.

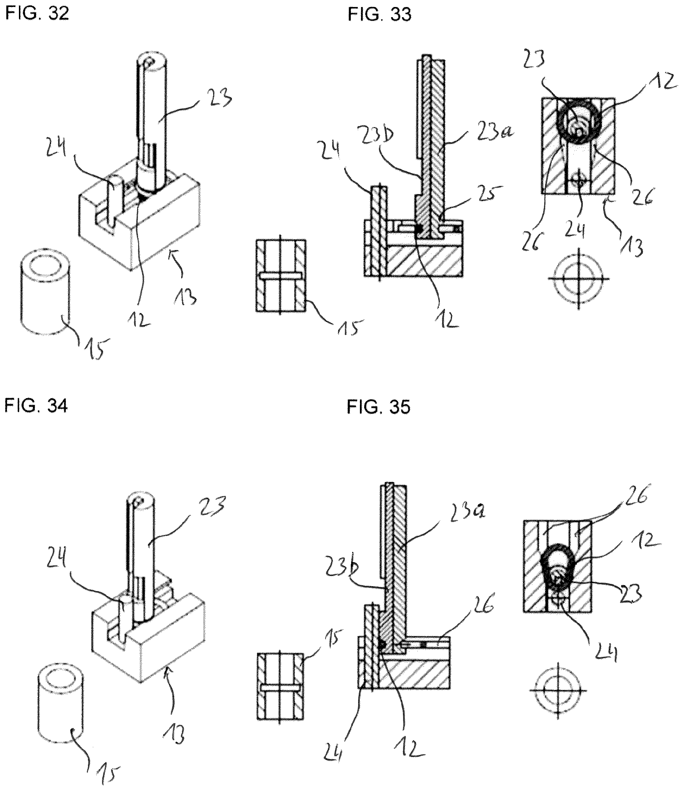

Anschliessend beginnt die in Fig. 32 und 33 dargestellte vorzugsweise kraftüberwachte Bewegung des Aufnahmestiftes 23 in Richtung auf den Beaufschlagungsstift 24 hin, wobei der Dichtring 12 noch unbewegt bleibt und daher schliesslich in die Aufnahmenut 8 des Aufnahmestiftes 23 aufgenommen wird. Diese Relativbewegung von Aufnahmestift 23 und Beaufschlagungsstift 24 - dieser könnte auch zusätzlich oder ausschliesslich auf den Aufnahmestift 24 hin verfahren werden - wird nun weiter fortgesetzt, bis die in den Fig. 34 und 35 gezeigte Position erreicht ist, in welcher Aufnahmestift 23 und Beaufschlagungsstift 24 parallel angeordnet aneinander liegen und der Beaufschlagungsstift 24 den Dichtring 12 in die Aufnahmenut 8 drückt und/oder darin an der Berührungsstelle zwischen Aufnahmestift 23 und Beaufschlagungsstift 24 fixiert.

Die Fetteinheit 13 oder Zuführeinheit weist zur Aufnahme des noch unverformten Ringes 12 und zu dessen seitliche Führung während der Verschiebung auf den Beaufschlagungsstift 24 hin vorzugsweise seitliche Nuten 26 auf, in welchen die quer zur relativen Bewegungsrichtung von Aufnahmestift 23 und Beaufschlagungsstift 24 liegenden Abschnitte des Ringes 12 gehalten und auch während seiner Bewegung zusammen mit dem Aufnahmestift geführt sind. Die Böden der einander gegenüberliegenden Nuten 26 verlaufen im Bereich der Position, in welcher der Aufnahmestift 23 in die Öffnung des Ringes 12 eingefahren wird, zunächst parallel zueinander und zur relativen Bewegungsrichtung von Aufnahmestift 23 und Beaufschlagungsstift 24. Im dem Beaufschlagungsstift 24 naheliegenden Abschnitt der Nuten 26 laufen der Böden aufeinander zu und bilden eine Art trichterförmige Verengung, durch welche der Ring 12 seitlich zusammengedrückt und an den Aufnahmestift 23 bzw. wenn vorhanden in die seitlichen Abschnitte einer Nut 8 des Aufnahmestiftes 23 hineingedrückt werden. Diese aufeinander zu verlaufenden Böden der Nuten 26 können allenfalls im letzten Abschnitt des Weges des Aufnahmestiftes 23 wieder in parallel verlaufende Abschnitte übergehen.

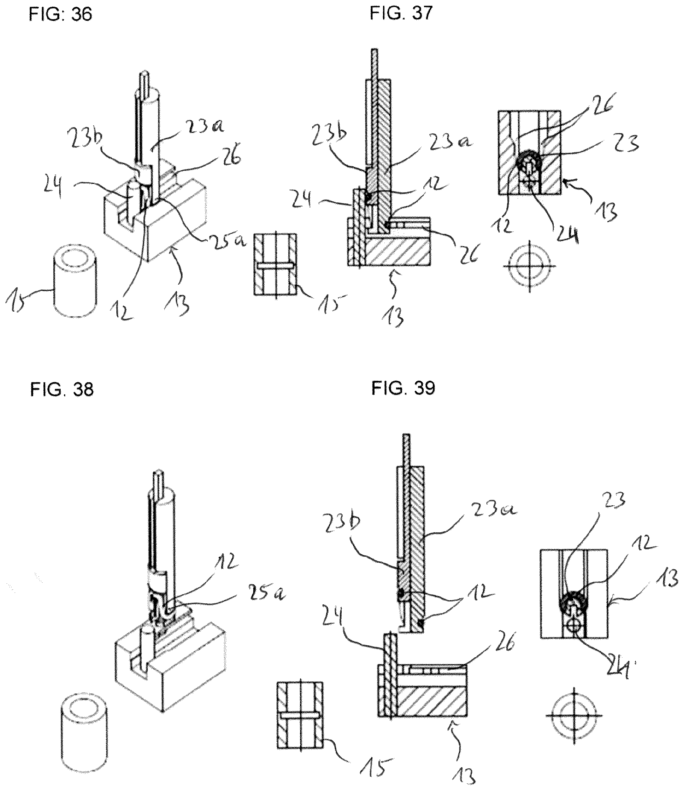

Der nächste Verfahrensschritt ist in Fig. 36 dargestellt und umfasst die axialparallele Relativbewegung der Teilstifte 23a, 23b derart, dass der Dichtring 12 noch in der Fetteinheit 13 oder Zuführeinheit aus der kreisrunden bzw. oval vorgeformten Form im Zuge der Relativbewegung der Teilstifte 23a, 23b in eine gestreckte und im gezeigten Beispiel auch dreidimensional gebogene Form verformt wird. Im Zuge der Bewegung des dem Beaufschlagungsstift 24 direkt angrenzenden Teilstifts 23b parallel zum Teilstift 23a und zum Beaufschlagungsstift 24 wird der zwischen dem Beaufschlagungsstift 24 und dem Aufnahmestift 23 gehaltene Abschnitt des Dichtringes 12 sicher im Teilstück der Aufnahmenut 8 des Teilstiftes 23b gehalten und mit diesem hochgezogen. Dieses Teilstück der Aufnahmenut 8 oder jeder den Ring 12 hintergreifender Vorsprung am Teilstift 23b zur axialen Kraftbeaufschlagung des Dichtringes 12 kann auch nur sehr kurz sein und die Form einer radial abstehenden Nase aufweisen. Dabei wird zuerst der Dichtring 12 auch auf der dem Beaufschlagungsstift 24 gegenüberliegenden Seite des Aufnahmestiftes 23 in die Aufnahmenut 8 hineingezogen, wobei der im Bereich des Teilstiftes 23b liegende Abschnitt des Dichtringes über die an zwei einander gegenüberliegenden Seiten des Teilstiftes 23a liegenden Schulter 25a hochgezogen und dabei hochgebogen wird. Die Nuten 26 sorgen hier neben dem Andrücken des Ringes 12 an den Aufnahmestift 23 auch dafür, dass der Ring 12 nicht über die Schultern 25a nach oben gleiten oder nach aussen ausweichen kann, sondern während des Hochziehens um die Schultern 25a herum gebogen und gezogen wird.

Vorzugsweise kann im Bereich oberhalb der axialen Länge des Aufnahmestiftes 23, der in die Fetteinheit 13 eintaucht bzw. welche zur Aufnahme und Verformung des Dichtringes 12 dient, ein Anschlag zur Bewegungsbegrenzung der relativen Verschiebung der Teilstifte 23a, 23b vorgesehen sein, wie beispielhaft in Fig. 39 gut zu erkennen ist.

Der Aufnahmestift 23 wird anschliessend, entweder entlang des Beaufschlagungstiftes 24 oder auch etwas beabstandet davon, aus der Fetteinheit 13 nach oben hin herausbewegt, wobei die relativ versetzte Stellung der Teilstifte 23a, 23b und die dreidimensional verformte Form des Dichtringes 12 beibehalten wird. Dieser Schritt ist in den Fig. 38 und 39 dargestellt. Auch hier ist sichergestellt, dass die beiden gerundeten Abschnitte des Dichtringes 12 in der Aufnahmenut 8 des Aufnahmestiftes 23 liegen, womit eine genau definierte Position sichergestellt und während der weiteren Handhabung des Ringes 12 eine sichere Haltewirkung gewährleistet ist, und dass aufgrund der gebogenen Streckung der dazwischenliegenden Abschnitte des Dichtringes 12 dieser mit seiner durchmesserbezogenen Außenkontur zur Einführung in den rohrförmigen Kanal der Zuführungsbohrung 16 und Positionieren in der Innennut 14 des Bauteils 15 einschiebbar ist.

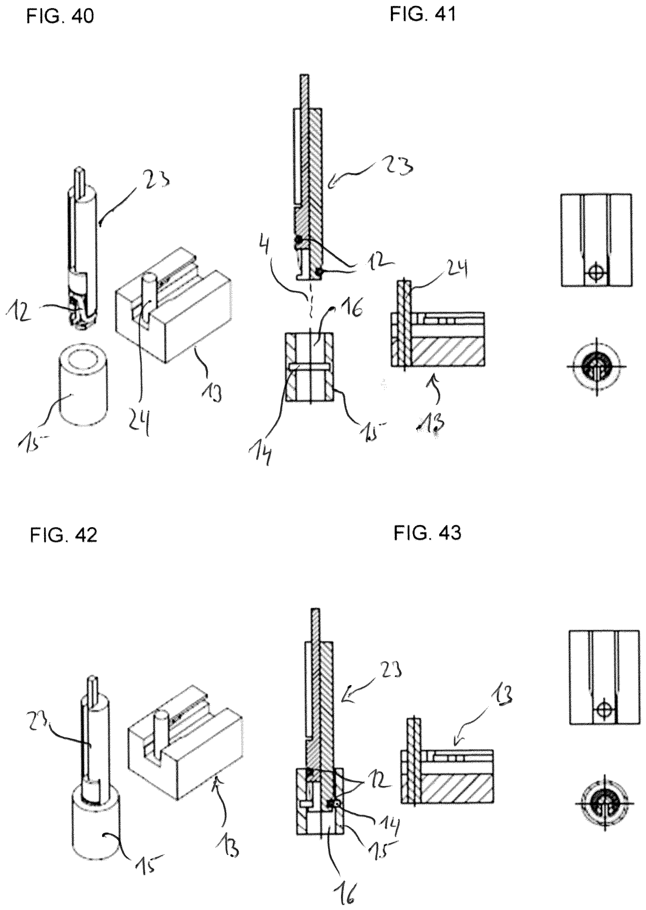

Wie in den Fig. 40 und 41 gezeigt ist, wird der Aufnahmestift 23 mit dem Dichtring 12 nun mittels der Aktoren und vorzugsweise kraftüberwacht über den Bauteil 15, insbesondere über die Zugangsbohrung 16 zur Innennut 14, gefahren, bis die Längsachsen von Aufnahmestift 23 und Zugangsbohrung 16 fluchten. Aus dieser Position kann der Aufnahmestift 23 nun wie in Fig. 42 und 43 gezeigt durch Absenken in die Bohrung 16 eingebracht werden, bis der unterste Abschnitt der Aufnahmenut 8, also der Abschnitt am Teilstift 23a, in Höhe der Innennut 14 liegt, wie gut in Fig. 43 zu sehen ist. Dabei ist ebenfalls zu erkennen, dass die Aussenkontur des Aufnahmestiftes 23 in Form und Dimension maximal der Innenkontur der Zugangsbohrung 16, jedenfalls in Höhe der Innennut 14 für den Dichtring 12, entspricht, wobei vorzugsweise diese beiden Konturen gleich sind.

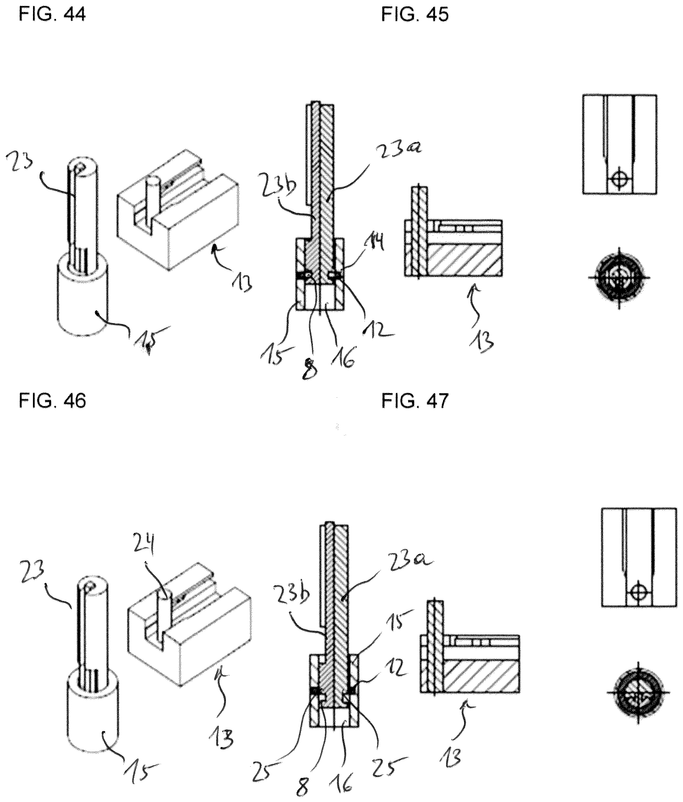

In einem weiteren, nachfolgenden Verfahrensschritt werden die Teilstifte 23a, 23b wieder in die ursprüngliche Position zurückbewegt, in welcher die Abschnitte der Aufnahmenut 8 auf beiden Teilstiften 23a, 23b auf gleicher Höhe liegen, wie dies in den Fig. 44 und 45 dargestellt ist. Dabei wird der Dichtring 12 während der Abwärtsbewegung des Teilstiftes 23b wieder entspannt und nimmt schliesslich wieder seine ursprüngliche, ebene und runde Form ein, in welcher er in der Fetteinheit 13 zur Verfügung gestellt worden war. Dies führt dazu, dass der Dichtring 12, ausgehend vom Abschnitt im Bereich des Teilstiftes 23a langsam in die Innennut 14 hineingleitet und durch die Beaufschlagung durch den Teilstift 23b während dessen Absenken auch in diese Innennut 14 sanft hineingedrückt wird.

Um nun sicherzustellen, dass der Dichtring 12 entlang seines gesamten Umfanges sicher und bestmöglich in die Innennut 14 eingedrückt ist, kann optional vorgesehen sein, dass der Aufnahmestift 23 noch ein Stück in die Zugangsbohrung 16 abgesenkt wird, vorzugsweise wieder über seinen kraftüberwachten Aktor. Diese Position ist in den Fig. 46 und 47 dargestellt. Dadurch wirkt die abgeschrägte Schulter 25 des Aufnahmestiftes 23 auf den Dichtring 12 ein und beaufschlagt diese auch mit einer Kraftkomponente senkrecht auf die Achse der Zugangsbohrung 16 bzw. der Innennut 14 und radial nach aussen hin, so dass der Ring 12 über seinen gesamten Umfang schonend, aber sicher in die Innennut 14 eingedrückt wird.

Im Fall eines Aufnahmestiftes 23 mit geringerem Durchmesser als jenem der Zugangsbohrung 16 bzw. als jenem der Innennut 14 mit eingesetztem Dichtring 12 kann auch eine Bewegung des gesamten Aufnahmestiftes 23 entlang der Innenkontur des Dichtringes 12 erfolgen. Die Aussenkontur des Aufnahmestiftes 23 weist eine nur geringfügig grösserer Krümmung auf als die Innenkontur des Dichtringes 12, womit die Aussenseite des Aufnahmestiftes 23 über einen grossen Umfangsabschnitt an der Innenkontur des Dichtringes 12 anliegt und dieser somit auch in dieser Ausführungsvariante äusserst materialschonend eingedrückt wird und Beschädigungen weitestgehend vermieden werden. Bevorzugt wird zumindest einmal die Drehrichtung geändert. Weiter bevorzugt folgt dabei zumindest einer ersten Drehung in einer Drehrichtung um etwa 90° zumindest eine zweite Drehung in die Gegenrichtung um etwa 180°.

Danach wird der Aufnahmestift 23 aus der Zugangsbohrung 16 angehoben und herausbewegt, und der Bauteil 15 mit eingesetztem Dichtring 12 ist bereit für die weitere Ver- oder Bearbeitung.

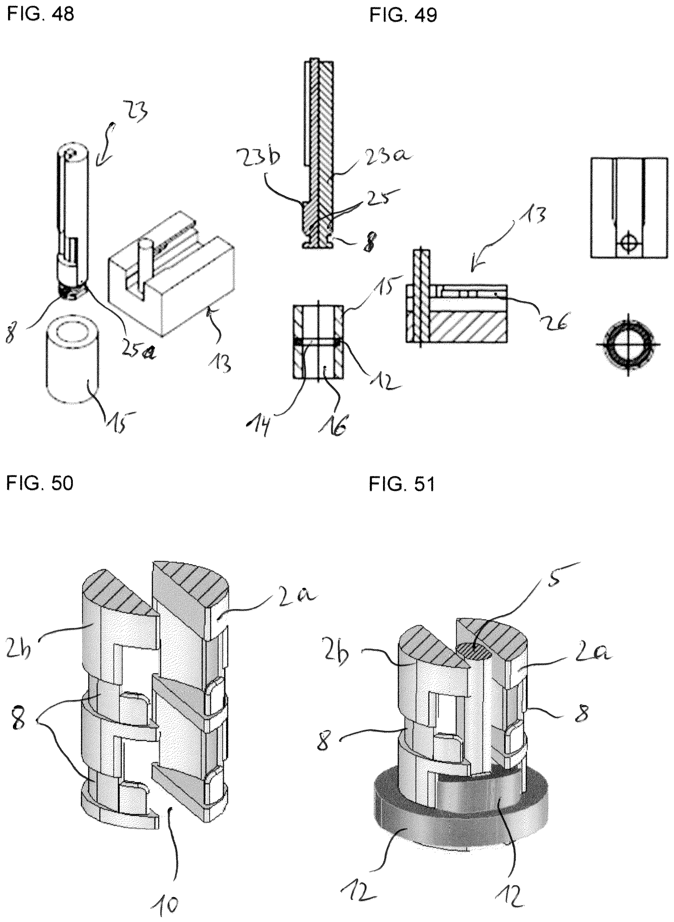

Fig. 50 zeigt eine Ansicht des unteren Endes eine Aufnahmestiftes 2, 23 in einer vorteilhaften Ausführungsform, mit zwei vertikal beabstandeten Nuten 8 zur Aufnahme von jeweils einem Ring 12. Die Nuten 8 können dabei gleich geformt oder unterschiedlich und auf die Abmessungen von unterschiedlichen Ringen 12 abgestimmt sein.

Fig. 51 ist eine Darstellung des unteren Endes des Aufnahmestiftes 2 der Fig. 50, nun aber mit in den Freiraum zwischen den Teilstiften 2a, 2b eingeführtem Beaufschlagungsstift 5 und mit einem zwischen den Teilstiften 2a, 2b geklemmten Ring. Dabei ist auch die weitere oben bereits angesprochene Verformung des Ringes 12 mit vertikal beabstandeten und in der Draufsicht überlappenden Abschnitten zu erkennen, nachdem der Beaufschlagungsstift 5 in seiner vertikal angehobenen und maximal in den Freiraum 10 zwischen die Teilstifte 2a, 2b hineinbewegten Stellung den nach innen hin verformten Abschnitt des Ringes 12 über die ursprüngliche Ebene des unverformten Ringes angehoben hat. In seiner Endstellung steht der Beaufschlagungsstift 5 an der Innenkontur des Abschnitt des Ringes 12 an, welcher Abschnitt in der ursprünglichen Ringebene verbleibt, während der um den Beaufschlagungsstift 5 herum gebogene, aufgehobene Abschnitt vertikal fluchtend oberhalb des eben belassenen Abschnittes zu liegen kommt.

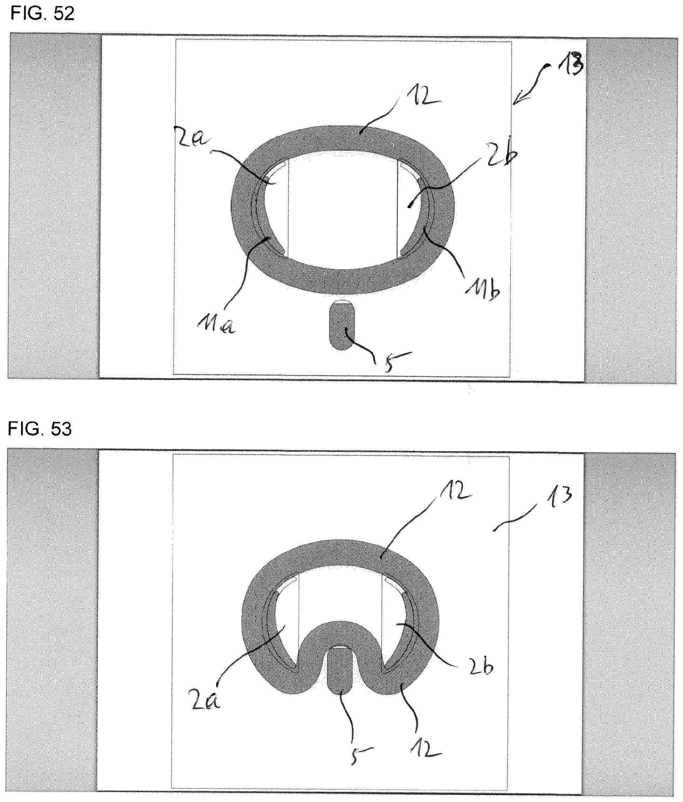

In den Fig. 52 bis Fig. 65 soll nochmals das Aufnehmen des Ringes 12 aus der Zuführeinheit oder Fetteinheit 13 bis hin zur vollständigen Montage in der Innennut 14 des Bauteils 15 im Querschnitt knapp oberhalb der Ebene des Ringes 12 in verschiedenen relevanten Stadien des erfindungsgemässen Verfahrens dargestellt werden.

Fig. 52 zeigt dabei das Auseinanderbewegen der Teilstifte 2a, 2b derart, dass der Dichtring 12 aus der kreisrunden Form im Zuge der Relativbewegung der Teilstifte 2a, 2b in eine gestreckte Form mit zwei im Wesentlichen parallel verlaufenden Abschnitten aufgedehnt wird. Die beiden gerundeten Abschnitte des Dichtringes 12 kommen in der Aufnahmenut 8 des Aufnahmestiftes 2 zu liegen,

Anschliessend wird, wie in Fig. 53 gezeigt ist, der Beaufschlagungsstift 5 quer zur Richtung der Relativbewegung der Teilstifte 2a, 2b relativ auf diese zu bewegt, so dass er, allenfalls mit einer nach unten wegragenden Verlängerung 17 (welche in den Fig. 52 bis Fig. 65 nicht sichtbar ist, da sie unterhalb der Schnittebene liegt), an einem der zwischen den Teilstiften 2a, 2b aufgespannten Abschnitten des Ringes 12 anliegt und im weiteren Verlauf der Bewegung diesen Abschnitt zur Mitte des Ringes 12 und auf die Längsachse 4 des Aufnahmestiftes 2 hin verformt. Vorzugsweise werden im Zuge dieser Bewegung auch die Teilstifte 2a, 2b bereits wieder etwas aneinander angenähert und in Richtung der Längsachse 4 der Stiftanordnung bewegt.

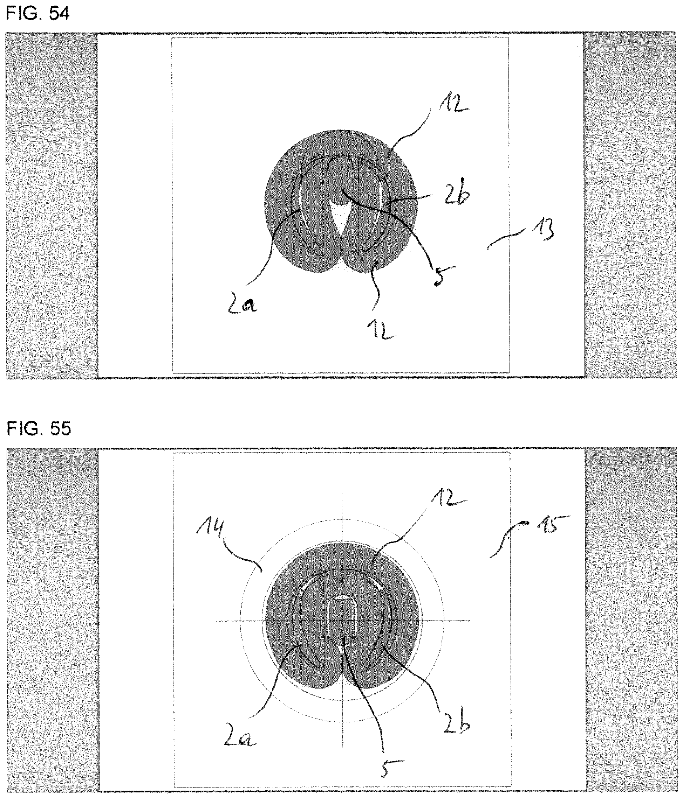

In einem weiteren, nachfolgenden Verfahrensschritt, der in Fig. 54 dargestellt ist, wird der Beaufschlagungsstift 5 axialparallel zum Aufnahmestift 2 entgegen der Zuführrichtung in die Bohrung 16 angehoben, vorzugsweise simultan mit einer weiteren Annährung der Teilstifte 2a, 2b aneinander mit weiterer Verkleinerung des Freiraums 10. Dabei wird der nach innen hin verformte Abschnitt des Ringes 12 über die ursprüngliche Ebene des unverformten Ringes angehoben und kann vorzugsweise fluchtend mit dem darunter liegenden Abschnitt ganz nach aussen geführt werden. Damit ergibt sich die grösstmögliche Verformung des Ringes 12 zur geringst möglichen Umfangskontur. Der Beaufschlagungsstift 5 liegt dabei an der Innenkontur des Ringes 12 an.

Ohne Anheben des Beaufschlagungstiftes 5 ergibt sich die Position der Fig. 55, bei welcher der nach innen hin verformte Abschnitt des Ringes 12 durch den in den Freiraum 10 zwischen den Teilstiften 2a, 2b bewegten Beaufschlagungsstift 5 an die Innenkontur des Ringes 12 an der dem Beaufschlagungsstift 5 gegenüberliegenden Seite gedrückt wird. Auch diese Art der Verformung ergibt bereits eine sehr geringe Aussenkontur für den verformten Ring 12. In beiden Fällen bleibt der Ring 12 während des Transportes zum Bauteil 15 und während des Einführens bis zur Innennut 14 durch die Zuführbohrung 16 in der in den Fig. 54 und Fig. 55 dargestellten Positionen zwischen den Teilstiften 2a, 2b und dem Beaufschlagungsstift 5 sicher und positionsgenau geklemmt.

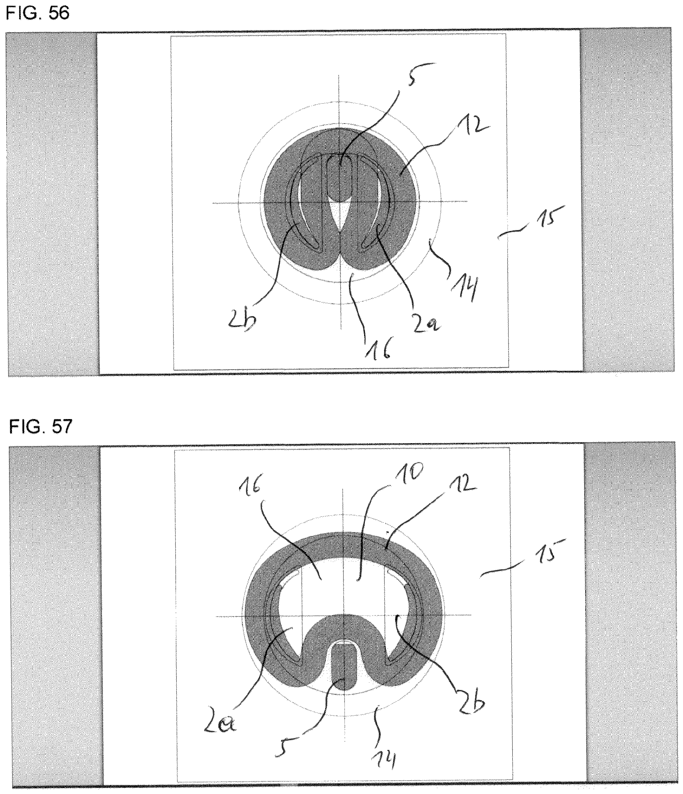

Fig. 56 zeigt beispielhaft des geklemmten Ring 12 in einer Konfiguration wie in Fig. 54 in der Zuführbohrung 16 in Höhe der Innennut 14, noch radial von den Oberkanten der Nut 14 beabstandet.

Zum Einsetzen des Rings 12 in die Innennut 14 werden, wie in Fig. 57 gezeigt ist, die Teilstifte 2a, 2b des Aufnahmestiftes 2 auseinanderbewegt, und simultan dazu oder sofort anschliessend daran wird auch der Beaufschlagungsstift 5 wieder radial von der Längsachse 4 der Stiftanordnung nach aussen hin verfahren. Damit kann sich der Ring 12 wieder entspannen, in seine ebene Konfiguration zurückgleiten und vorerst in Richtung der Bewegung der Teilstifte 2a, 2b hin nach aussen in die Innennut 14 hinein ausdehnen.

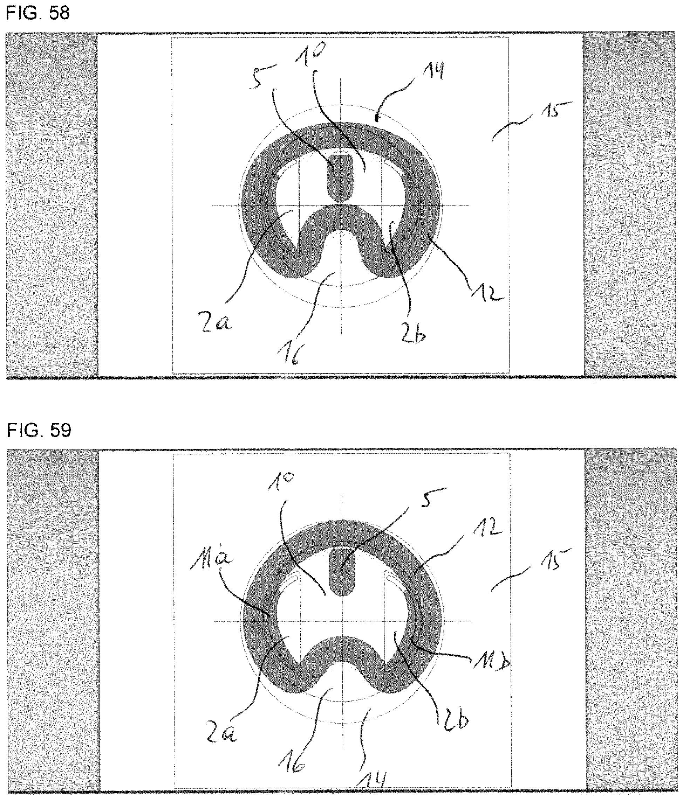

In einem nächsten Verfahrensschritt dieser Ausführungsform des Verfahrens wird der Beaufschlagungsstift 5 erneut axialparallel zum Aufnahmestift 2 entgegen der Zuführrichtung in die Bohrung 16 angehoben und in die zentrale Öffnung des noch verformten Ringes 12 verbracht und dort wieder abgesenkt, wie in Fig. 58 dargestellt ist. Der Beaufschlagungsstift 5 wird dann weiter radial in der gleichen Bewegungsrichtung nach aussen hin geführt, kommt an der Innenkontur des Ringes 12 zum Anliegen und drückt den Ring 12 bei Fortsetzung der bisherigen Bewegung an der der verformten Seite des Ringes 12 gegenüberliegenden Seite in die Innennut 14, wie dies in Fig. 59 dargestellt ist.

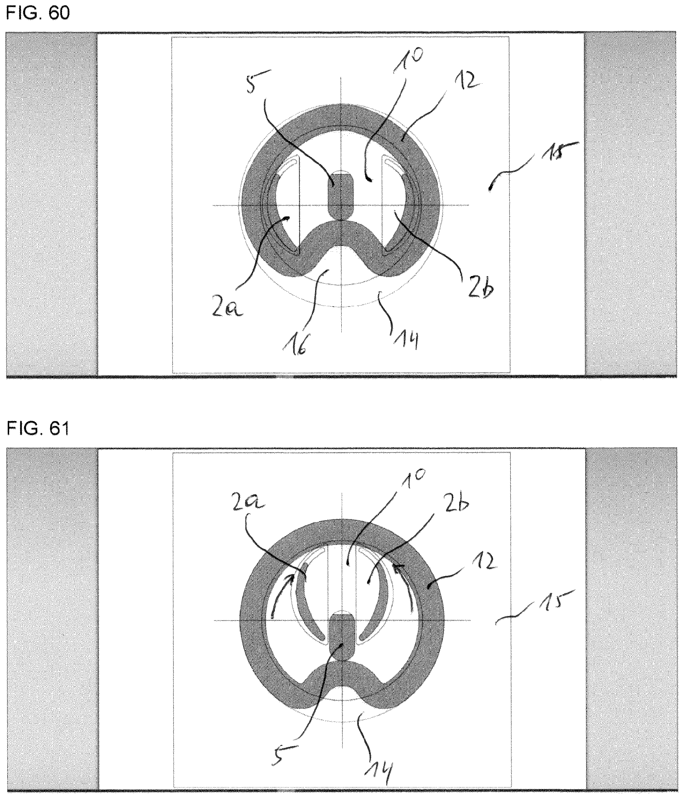

Fig. 60 zeigt den nächsten Verfahrensschritt, bei welchem die Bewegungsrichtung des Beaufschlagungsstiftes 5 im Freiraum 10 zwischen den Teilstiften 2a, 2b umgekehrt und dieser von der Innenseite des Ringes 12 her an den noch verformten Abschnitt des Ringes 12 herangefahren wird.

Anschliessend wird bei weiter an der Innenkontur des noch verformten Abschnittes des Ringes 12 anliegendem Beaufschlagungsstift 5 mit den Teilstiften 2a, 2b eine gekoppelte Bewegung aufeinander zu und von dem verformten Abschnitt des Ringes 12 weg durchgeführt, bis die Teilstifte 2a, 2b maximal aneinander angenähert sind, soweit es der Beaufschlagungsstift 5 zwischen ihnen erlaubt, und bis die Teilstifte 2a, 2b den Abschnitt des Ringes 12 in die Innennut 14 drücken, der dem noch verformten Abschnitt gegenüberliegt. Bevorzugt werden die beiden an sich orthogonalen Bewegungen der Teilstifte 2a, 2b derart aufeinander abgestimmt, dass sich eine kreissegmentförmige Bewegung entlang der Innenkontur des Dichtringes 12 ergibt, wie dies in Fig. 61 durch die gebogenen Pfeile symbolisiert ist. Damit wird der Ring 12 bereits über mehr als die Hälfte seines Umfanges vollständig und sicher und dabei gleichzeitig materialschonend in die Innennut 14 eingedrückt.

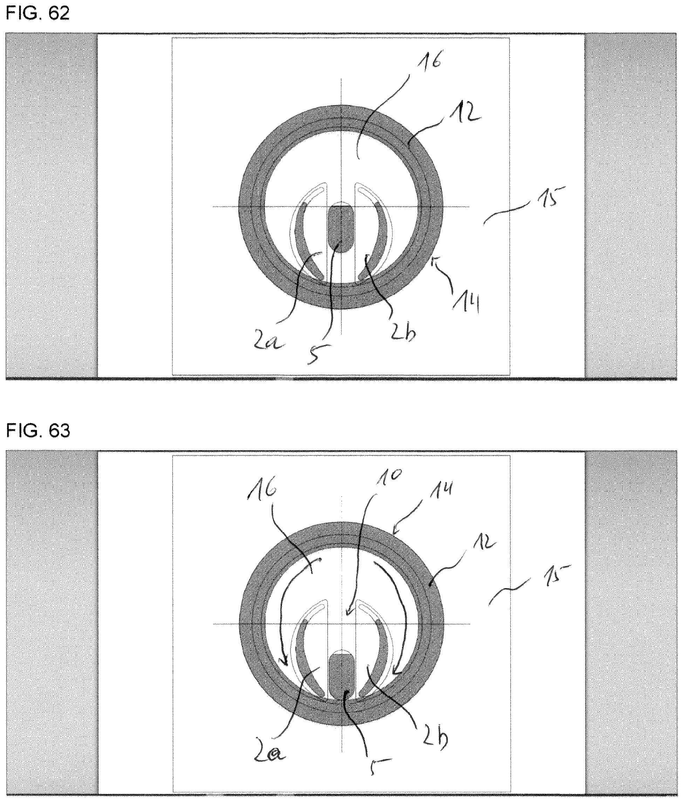

In einem weiteren Schritt des Verfahrens werden die beiden Teilstifte 2a, 2b dann an die diametral gegenüberliegende Innenkontur des Ringes 12 geführt. Bevorzugt geschieht dies wieder durch aufeinander abgestimmte Bewegungen der Teilstifte 2a, 2b, dass sich eine kreissegmentförmige Bahn, wieder symbolisiert durch die gebogenen Pfeile, entlang der Innenkontur des Ringes 12 von einer Position wie in Fig. 61 zur Position der Fig. 63 ergibt. Das Eindrücken in dieser Position der Fig. 63 kann vorteilhafterweise noch durch den radial nach aussen geführten Beaufschlagungsstift 5 unterstützt werden.

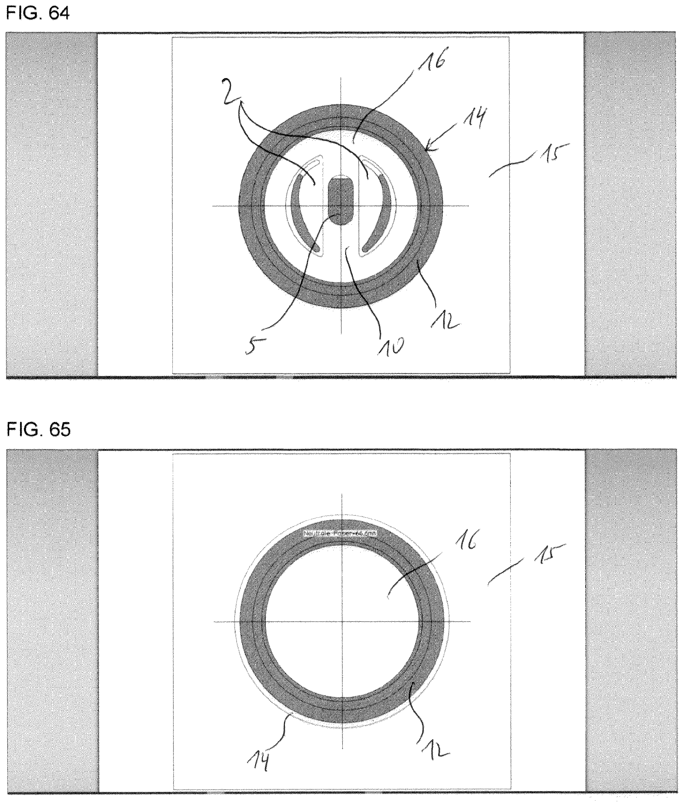

Nachdem nun der Ring 12 entlang seines gesamten Umfanges sicher und vollständig in der Innennut 14 aufgenommen ist, werden nun die Teilstifte 2a, 2b wieder zur Mitte der Zuführbohrung 16 hin aufeinander zu und zur Längsmittelachse 4 hin gefahren, ebenso wie der Beaufschlagungsstift 5, der im Freiraum 10 zwischen den Teilstiften 2a, 2b aufgenommen wird. Diese Grundstellung des Aufnahmestiftes 2 und des Beaufschlagungsstiftes 5 zueinander und in Bezug auf die Längsmittelachse 4 der Vorrichtung ist in Fig. 64 dargestellt. Fig. 65 schliesslich zeigt die Situation nach Herausziehen der Stifte 2, 5 aus der Zuführbohrung 16, mit allein darin verbliebenem, in der Innennut 14 eingedrücktem Ring 12.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Montagevorrichtung
- 2: Aufnahmestift
2a Teilstift
2b Teilstift
- 3: Aktor
- 4: Längsachse Aufnahmestift
- 5: Beaufschlagungsstift
- 6: Aktor Aufnahmestift
- 7: Aktor Beaufschlagungsstift
7a Aktor Beaufschlagungsstift vertikal
- 8: Aufnahmenut
- 9: Kraftsensor
- 10: Freiraum zwischen Teilstiften
- 11: Montageschilde
11a Montageschild
11b Montageschild
- 12: Dichtring
- 13: Fetteinheit oder Zuführeinheit
- 14: Innennut
- 15: Bauteil mit Innennut
- 16: Zugangsbohrung
- 17: Verlängerung des Beaufschlagungsstiftes
- 18: Halteeinheit
18a Haltebacke
18b Haltebacke
- 19: Öffnung
- 20: Ausnehmung in Haltebacke 18b
- 21: Längsachse der Zugangsbohrung
- 22: Montagebohrung
- 23: Aufnahmestift
23a Teilstift
23b Teilstift
- 24: Beaufschlagungsstift
- 25: Schulter
25a Schulter des Teilstiftes 23a
- 26: Nut der Zuführeinheit 13

## Patentansprüche

1. Montagevorrichtung (1, 22) zum Positionieren von flexiblen Ringen (12), insbesondere von O-Ringen, Formdichtungen, Dicht- oder Abstreifringen, in Innennuten (14) von Bauteilen (15), mit zumindest einem in alle orthogonalen Richtungen verfahrbaren Aufnahmestift (2, 23), gegebenenfalls mit einer zumindest teilringförmigen umlaufenden Aufnahme (8) oder eine Anlageschulter für den Ring (12), weiters mit einem Beaufschlagungsstift (5, 24) zum Verformen des Ringes (23) derart, dass der Ring mit seiner durchmesserbezogenen Außenkontur zur Einführung in eine Zugangsbohrung (16) und Positionieren in den Bauteil (15) einschiebbar ist, wobei der Aufnahmestift (2, 23) und der Beaufschlagungsstift (5, 24) parallel zueinander ausgerichtet und in einer Richtung quer zu deren Längserstreckung relativ zueinander verfahrbar sind, **dadurch gekennzeichnet, dass** der Aufnahmestift (2, 23) aus zumindest zwei in Längsrichtung parallel angeordneten und relativ zueinander bewegbaren Teilstiften (2a, 2b; 23a, 23b) derart besteht, dass der Ring (23) im Zug der Relativbewegung verformt wird.

2. Montagevorrichtung nach Anspruch 1, **dadurch gekennzeichnet, dass** die zwei Teilstifte (2a, 2b) quer zu deren Längserstreckung bewegbar sind, um den Ring im Zug der Relativbewegung in eine gestreckte Form zu bringen.

3. Montagevorrichtung nach Anspruch 2, **dadurch gekennzeichnet, dass** der Beaufschlagungsstift (5) und die Teilstifte (2a, 2b) quer zur Richtung der Relativbewegung der Teilstifte relativ zueinander bewegbar sind, so dass der Ring (12) mit seiner durchmesserbezogenen Außenkontur zur Einführung in die Zugangsbohrung (16) und Positionieren in den Bauteil (15) einschiebbar ist.

4. Montagevorrichtung nach Anspruch 3, **dadurch gekennzeichnet, dass** eine der Endpositionen des Beaufschlagungsstiftes (5) im Zuge der Relativbewegung zum Aufnahmestift (2) zwischen den angenäherten Positionen der Teilstifte (2a, 2b) liegt.

5. Montagevorrichtung nach Anspruch 4, **dadurch gekennzeichnet, dass** der Beaufschlagungsstift (5) auch axialparallel zum Aufnahmestift (2) bewegbar und/oder um eine parallel zur Richtung der Relativbewegung der Teilstifte liegende Achse schwenkbar ist.

6. Montagevorrichtung nach einem der Ansprüche 1 bis 5, **dadurch gekennzeichnet, dass** die Aussenkontur jedes der beiden Teilstifte (2a, 2b) zumindest in der Höhe, in welcher der Ring (12) zu liegen kommt, vorzugsweise schalenförmig (11a, 11b) über zumindest ein Viertel bis maximal über die Hälfte des Umfangs des Ringes (12) verläuft und eine nur geringfügig grössere Krümmung aufweist.

7. Montagevorrichtung nach Anspruch 1, **dadurch gekennzeichnet, dass** die zwei Teilstifte (23a, 23b) parallel zu deren Längserstreckung relativ zueinander bewegbar sind, und die Aussenkontur jedes der beiden Teilstifte (23a, 23b) zumindest über den axialen Längsabschnitt, in welchem der Ring (12) zu liegen kommt, die äussere Begrenzung des Aufnahmestiftes (23) darstellt und vorzugsweise schalenförmig über zumindest ein Viertel bis maximal über die Hälfte des Umfangs des Ringes (12) verläuft.

8. Montagevorrichtung nach Anspruch 7, **dadurch gekennzeichnet, dass** an einem der Teilstifte (23a) benachbart dem Übergang zum zweiten Teilstift (23b) zwei Biegeschultern (25a) angeordnet sind, um den Ring (12) im Zug der Relativbewegung in eine um eine quer zu Ringebene liegende Achse geknickte Form zu bringen.

9. Montagevorrichtung nach Anspruch 8, **dadurch gekennzeichnet, dass** eine Anordnung zur Führung der seitlichen Abschnitte des Ringes (12) zu beiden Seiten der Bahn des Aufnahmestiftes (23) angeordnet ist, welche Anordnung vorzugsweise den Ring (12) seitlich und unterhalb der Biegeschultern (25a) auf den Aufnahmestift (23) hin verformende Abschnitte (26) aufweist.

10. Montagevorrichtung nach einem der Ansprüche 7 bis 9, **dadurch gekennzeichnet, dass** die Endposition der parallelen Relativbewegung der Teilstifte (23a, 23b) derart gewählt ist, dass der Ring (12) zumindest nach Erreichen dieser Endposition in einer geknickten und gestreckten Form vorliegt.

11. Montagevorrichtung nach einem der Ansprüche 7 bis 10, **dadurch gekennzeichnet, dass** an einem der Teilstifte (23a) eine zumindest teilringförmige umlaufende Aufnahme (8) oder eine Anlageschulter für den Ring (12) und am anderen Teilstift (23b) ein den Ring hintergreifender Vorsprung oder eine zumindest teilringförmige Aufnahme (8) vorhanden ist.

12. Montagevorrichtung nach einem der Ansprüche 8 bis 11, **dadurch gekennzeichnet, dass** in einer Endposition der beiden Teilstifte (23a, 23b) komplementär durch beide Teilstifte eine umlaufende Schulter (25) oder eine kegelstumpfförmige Durchmesservergrösserung zum Eindrücken des Ringes (12) in die Nut (14) ausgebildet ist.

13. Montagevorrichtung nach einem der Ansprüche 1 bis 12, **dadurch gekennzeichnet, dass** separate, vorzugsweise weg- und/oder kraftüberwachte Aktoren für die Bewegung jedes der Teilstifte (2a, 2b, 23a, 23b) und jedes Beaufschlagungsstiftes (5, 24) und allenfalls für die Drehung des Aufnahmestiftes (2, 23) und des Beaufschlagungsstiftes (5, 24) vorhanden sind.

14. Verfahren zum Positionieren von flexiblen Ringen, insbesondere von Dicht- oder Abstreifringen, in Innennuten von Bauteilen,
mittels einer Montagevorrichtung gemäss einem der Ansprüche 1 bis 6 und 13, umfassend
Aufnehmen eines Ringes (12) mittels eines in zumindest zwei Teilstifte (2a, 2b) geteilten Aufnahmestiftes (2),
Verformen des Rings (12) an einer Stelle zur Ringmitte hin, mittels eines Beaufschlagungsstiftes (5),
Klemmen des verformten Ringes (12) zwischen dem Aufnahmestift (2) und dem Beaufschlagungsstift (5),
Einbringen des verformten Ringes (12) an die Stelle der Innennut (14) in den Bauteil (15),
Freigeben des Ringes (12) unter Rückformung in die Ringform durch Auseinanderfahren des Aufnahmestiftes (2) und des Beaufschlagungsstiftes (5), Eindrücken des Ringes (12) in die Ringnut (14) durch Auseinanderbewegen von Aufnahmestift (2) und Beaufschlagungsstift (5) sowie durch Drehen der Anordnung von Aufnahmestift (2) und Beaufschlagungsstift (5) um die Mittelachse der Bohrung (16) mit der Innennut (14),
**dadurch gekennzeichnet, dass**
beim Aufnehmen des Ringes (12) die beiden Teilstifte (2a, 2b) des Aufnahmestiftes (2) auseinanderbewegt und der Ring (12) damit in längliche Form gezogen wird, wobei der Durchmesser des Ringes (12) in einer Richtung quer zur Bewegungsrichtung der Teilstifte (2a, 2b) verringert wird.

15. Verfahren nach Anspruch 14, **dadurch gekennzeichnet, dass** der Ring (12) nach Verformung in längliche Form und anschliessendes Verformen des Rings an einer Stelle zur Ringmitte hin mittels des Beaufschlagungsstiftes (5) für das Einbringen in den Bauteil (15) zwischen den Teilstiften (2a, 2b) und dem Beaufschlagungsstift (5) geklemmt wird.

16. Verfahren nach Anspruch 15, **dadurch gekennzeichnet, dass** der zur Ringmitte verformte Abschnitt des Ringes (12) vor der Klemmung zwischen den Teilstiften (2a, 2b) durch eine nacheinander oder simultan erfolgende Bewegung des Beaufschlagungsstiftes (5) quer zu den Teilstiften (2a, 2b) und achsparallel zu diesen über die ursprüngliche Ringebene angehoben und überlappend mit einem ursprünglich gegenüberliegenden Abschnitt des Ringes (12) angeordnet wird.

17. Verfahren nach Anspruch 15 oder 16, **dadurch gekennzeichnet, dass** der Ring (12) zumindest mittels der Aussenkonturen der allenfalls radial auseinanderbewegten Teilstifte (2a, 2b), vorzugsweise durch zusätzliches Beaufschlagen der Innenseite des Ringes (12) von innen her in radialer Richtung mittels des Beaufschlagungstiftes (5) in die Nut (14) gedrückt wird.

18. Verfahren nach Anspruch 17, **dadurch gekennzeichnet, dass** der Ring (12) unter Drehung der Anordnung von Teilstiften (2a, 2b) und Beaufschlagungsstift (5) in die Nut (14) gedrückt wird.

19. Verfahren zum Positionieren von flexiblen Ringen, insbesondere von Dicht- oder Abstreifringen, in Innennuten von Bauteilen,
mittels einer Montagevorrichtung gemäss Anspruch 1 und einem der Ansprüche 7 bis 13,
umfassend Aufnehmen eines Ringes (12) mittels eines geteilten Aufnahmestiftes (23),
**gekennzeichnet durch**
Klemmen des Ringes (12) zwischen dem Aufnahmestift (23) und dem Beaufschlagungsstift (24) durch radiale Abstandsverkleinerung zwischen Aufnahmestift und Beaufschlagungsstift,
Hochbiegen eines Abschnittes des Ringes (12) aus der ursprünglichen Ringebene durch parallele Relativbewegung von zwei Teilstiften (23a, 23b), wobei gleichzeitig der Ring (12) in längliche Form gezogen und der Durchmesser des Ringes in einer Richtung verringert wird,
Einbringen des verformten Ringes (12) an die Stelle der Innennut (14) in den Bauteil (15),
Freigeben des Ringes (12) unter Rückformung in die Ringform durch paralleles Bewegen der Teilstifte (23a, 23b) in die Ausgangsposition bei Aufnehmen des Ringes,
Eindrücken des Ringes (12) in die Ringnut (14) durch axiales Bewegen des Aufnahmestiftes (23), um einen Abschnitt grösseren Durchmessers (25) in die Höhe des Ringes (12) zu bringen.

20. Verfahren nach Anspruch 19, **dadurch gekennzeichnet, dass** der Ring (12) während der Abstandsverkleinerung zwischen Aufnahmestift (23) und Beaufschlagungsstift (24) von beiden Seiten her auf den Aufnahmestift (23) hin verformt und vorzugsweise bis zum Beenden des Hochziehens mittels der parallelen Relativbewegung der Teilstifte (23a, 23b) seitlich an den Aufnahmestift (23) angedrückt wird.

21. Verfahren nach Anspruch 19 oder 20, **dadurch gekennzeichnet, dass** der Ring (12) durch Drehen des Aufnahmestiftes (23) um seine Längsachse oder durch axiales Entlangbewegen des Aufnahmestiftes (23) in Zuführrichtung an Ring (12) und Innennut (14) in die Nut eingedrückt wird.
